# EUROPEAN PATENT APPLICATION

(11) **EP 4 333 563 A1**
(43) Date of publication of application: **06.03.2024**
(21) Application number: 22795965.7
(22) Date of filing: 21.03.2022
(51) Int. Cl.: H05B 6/12, H05B 6/06

(54) **INDUCTION HEATING TYPE COOKTOP**

(30) Priority: 30.04.2021 KR 20210056714; 07.01.2022 KR 20220002490
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR); JEON, Seonho, Seoul 08592 (KR); CHO, Chuhyoung, Seoul 08592 (KR); JI, Jongseong, Seoul 08592 (KR); YANG, Jaekyung, Seoul 08592 (KR); LEE, Yongsoo, Seoul 08592 (KR)
(74) Representative: Vossius & Partner Patentanwälte Rechtsanwälte mbB
(86) International application number: PCT/KR2022/003906
(87) International publication number: WO 2022/231131

(57) **Abstract**

An induction heating type cooktop according to an embodiment of the present disclosure comprises: an upper part on which an object to be heated is placed; an intermediate heating element installed on the upper plate; a first working coil and a second working coil for generating a magnetic field passing through at least the object to be heated or the intermediate heating element; and an inverter unit for controlling a first direction of a first current flowing through the first working coil and a second direction of a second current flowing through the second working coil, wherein according to the type of the object to be heated, the area of a loop formed by the current induced by the intermediate heating element may be changed.

## Description

### TECHNICAL FIELD

The present disclosure relates to an induction heating type cooktop. More particularly, the present disclosure relates to an induction heating type cooktop, which can heat a magnetic body and a non-magnetic body.

### BACKGROUND ART

Various types of cooking appliances are used to heat food at home or in the restaurant. According to the related art, a gas stove using gas as a fuel source has been widely used. However, recently, devices for heating an object, for example, a cooking vessel such as a pot, by using electricity instead of gas have been more widely used.

A method for heating the object to be heated using electricity is largely divided into a resistance heating method and an induction heating method. The electrical resistance method is a method for heating an object to be heated by transferring heat generated when electric current flows through a metal resistance wire or a non-metal heating element such as silicon carbide to the object to be heated (e.g., a cooking container) through radiation or conduction. In the induction heating method, when high-frequency power having a predetermined intensity is applied to a coil, eddy currents are generated in the object to be heated using magnetic fields generated around the coil so that the object is heated.

Recently, most of the induction heating methods are applied to cooktops.

However, such a cooktop has a limitation in that the heating efficiency for a non-magnetic container is very low compared to the heating efficiency for a magnetic container. Thus, it is desirable to be able to a change in resonance point according to the type of object to be heated, a target output, etc.

### DISCLOSURE OF THE INVENTION

### TECHNICAL PROBLEM

An aspect of the present disclosure is directed to an induction heating type cooktop, which is capable of heating both of a magnetic body and a non-magnetic body.

An aspect of the present disclosure provides an induction heating type cooktop having three resonance systems in which a main working coil is always connected to an inverter, and a sub-working coil is selectively connected to the inverter.

An aspect of the present disclosure is directed to an induction heating type cooktop capable of controlling a phase of a coil when having an intermediate heating element.

### TECHNICAL SOLUTION

An induction heating type cooktop according to the present disclosure includes: an upper plate on which an object to be heated is placed; an intermediate heating element installed on the upper plate; a plurality of working coils configured to generate magnetic fields passing through the object to be heated or the intermediate heating element; a resonance capacitor configured to resonate with at least one of the plurality of working coils; an inverter configured to apply current to at least one of the plurality of working coils; and a switch configured to selectively connect at least one of the plurality of working coils to the inverter.

The plurality of working coils can include a first working coil having one end connected to the inverter and the other end connected to the switch; and a second working coil selectively connected to the first working coil according to a state of the switch.

The switch can include a first switch and a second switch, wherein the first switch can be configured to determine whether the first working coil and the second working coil are connected to each other, and the second switch can be configured to determine whether the second working coil and the resonance capacitor are connected to each other.

The first switch can be configured to connect the first working coil to a first point between the second working coil and the second switch or a second point between the second working coil and the first switch, and the second switch can be configured to connect the resonance capacitor to the first point or the second point.

In a first operation mode, the first switch can be configured to connect the first working coil to the second point, and the second switch is configured to connect the resonance capacitor to the first point, and in a second operation mode, the first switch can be configured to connect the first working coil to the first point, and the second switch is configured to connect the resonance capacitor to the second point.

In a third operation mode, the first switch and the second switch can be configured to connect the first working coil and the resonance capacitor to the first point or the second point at the same time.

The first working coil can be disposed inside the second working coil, and the number of turns of the second working coil can be less than the number of turns of the first working coil.

The first working coil and the second working coil can be disposed side by side at left and right sides, respectively, and the number of turns of the first working coil and the number of turns of the second working coil can be the same.

An induction heating type cooktop according to an aspect of the present disclosure includes an upper plate on which an object to be heated is placed; an intermediate heating element installed on the upper plate; a plurality of working coil comprising at least first and second working coils configured to generate magnetic fields for heating the object to be heated; and an inverter configured to apply current to at least one of the plurality of working coils, wherein a direction of the current flowing through the first working coil is constant, and a direction of the current flowing through the second working coil is variable.

In a first operation mode, directions of the current applied to the first working coil and the second working coil can be the same, and in a second operation mode, directions of the current applied to the first working coil and the second working coil can be different from each other.

In a third operation mode, the current can be applied only to the first working coil, and no current can be applied to the second working coil.

The induction heating type cooktop can further include a switch configured to change the direction of the current flowing through the second working coil.

The inverter can be driven at a constant operation frequency, and an output can be changed according to the current flowing through the second working coil.

When the direction of the current flowing through the second working coil is different from the direction of the current flowing through the first working coil, the object to be heated can be heated at a first output, when the current does not flow through the second working coil, the object to be heated can be heated at a second output less than the first output, and when the direction of the current flowing through the second working coil is the same as the direction of the current flowing through the first working coil, the object to be heated can be heated at a third output less than the second output.

A composite inductance of the plurality of working coils can vary according to the current flowing through the second working coil.

### ADVANTAGEOUS EFFECTS

According to the embodiment of the present disclosure, there can be the advantage that it is easy to change the output at the same operation frequency. For example, there can be the advantage that the power control range is widened.

According to the embodiment of the present disclosure, it can be possible to simplify the structure for changing the resonance point and reduce the manufacturing costs, thereby facilitating the inductance adjustment and controlling the magnetic field region.

According to the embodiment of the present disclosure, there can be the advantage in that the power loss due to the material or size of the object to be heated, the noise avoidance logic, etc. is minimized.

According to the embodiment of the present disclosure, there can be the advantage that it is easy to change the three resonance systems through the control of the connection method of the sub-working coil.

According to the embodiment of the present disclosure, by changing the distribution of the magnetic fields generated by the working coil, the magnetic fields can be concentrated on the cooking container itself or concentrated on the intermediate heating element, thereby improving the heating efficiency for each of the magnetic and non-magnetic bodies.

According to the embodiment of the present disclosure, since the area of the loop generated by the current induced in the intermediate heating element is adjustable, the magnetic field concentration area can be changed regardless of the shape, thickness, material, etc. of the intermediate heating element, and thus, there can be the advantage in that the design restrictions on the intermediate heating element are minimized.

According to the embodiment of the present disclosure, the material of which the thickness is equal to or less than the skin depth can be used as the intermediate heating element, which has the advantage of securing diversity in the material or shape of the intermediate heating element. In addition, as the restrictions on the intermediate heating element are minimized, the manufacturing costs can be reduced.

According to the embodiment of the present disclosure, since the coupling of the magnetic fields and the intermediate heating element is reduced while heating the magnetic body, the limitation in which the upper plate is heated can be minimized, and thus the stability can be improved and power consumption can be reduced.

### BRIEF DESCRIPTION OF THE DRAWINGS

FIG. 1 is a perspective view of an induction heating type cooktop according to an embodiment of the present disclosure.
FIG. 2 is a cross-sectional view illustrating the induction heating type cooktop and an object to be heated according to an embodiment of the present disclosure.
FIG. 3 is a circuit diagram of the induction heating type cooktop according to an embodiment of the present disclosure.
FIG. 4 is a circuit diagram of an induction heating type cooktop according to a first embodiment of the present disclosure.
FIG. 5 is a circuit diagram of an induction heating type cooktop according to a second embodiment of the present disclosure.
FIG. 6 is a circuit diagram of an induction heating type cooktop according to a third embodiment of the present disclosure.
FIG. 7 is a circuit diagram of an induction heating type cooktop according to a fourth embodiment of the present disclosure.
FIG. 8 is a graph illustrating a resonance curve in a cooktop according to an embodiment of the present disclosure.
FIGS. 9 to 11 is a view illustrating a shape of magnetic fields generated in the cooktop provided with an intermediate heating element according to an embodiment of the present disclosure.
FIG. 12 is a view illustrating formation of a loop when the intermediate heating element is provided into two donut shapes or ring shapes having different diameters according to an embodiment of the present disclosure.
FIG. 13 is a view for explaining an induction heating type cooktop according to an embodiment of the present disclosure.
FIG. 14 is a cross-sectional view illustrating the induction heating type cooktop and an object to be heated according to an embodiment of the present disclosure.
FIG. 15 is a cross-sectional view illustrating an induction heating type cooktop and an object to be heated according to another embodiment of the present disclosure.
FIGS. 16 and 17 are views for explaining a change in impedance between the intermediate heating element and the object to be heated according to kinds of objects to be heated.
FIG. 18 is a control block diagram illustrating a method for controlling an inverter according to the object to be heated in the induction heating type cooktop according to an embodiment of the present disclosure.
FIG. 19 is a flowchart illustrating an operating method of the cooktop according to an embodiment of the present disclosure.
FIG. 20 is a view illustrating a state of magnetic fields when directions of current flowing through a plurality of working coils are different from each other according to an embodiment of the present disclosure.
FIG. 21, including parts (a) and (b), illustrates a state of a loop generated in an intermediate heating element when directions of the current flowing through the plurality of working coils are different from each other according to an embodiment of the present disclosure.
FIG. 22 is a view illustrating a state of the magnetic fields when directions of the current flowing through the plurality of working coils are the same according to an embodiment of the present disclosure.
FIG. 23, including parts (a) and (b), illustrates a state of the loop generated in the intermediate heating element when directions of the current flowing through the plurality of working coils are the same according to an embodiment of the present disclosure.
FIG. 24, including parts (a)-(d), illustrates examples of various shapes of the working coil according to embodiments of the present disclosure.
FIG. 25, including parts (a)-(f), illustrates examples of the intermediate heating element installed together with the working coil illustrated in FIG. 24 according to embodiments of the present disclosure.
FIG. 26, including parts (a)-(f), illustrates examples of various shapes of the working coil according to embodiments of the present disclosure.
FIG. 27, including parts (a) and (b), is a view illustrating an example of the intermediate heating element installed together with the working coil illustrated in FIG. 26 according to an embodiment of the present disclosure.
FIG. 28 is a view illustrating a first example of a circuit diagram for controlling directions of current flowing through a plurality of working coils according to an embodiment of the present disclosure.
FIG. 29 is a view illustrating a second example of the circuit diagram for controlling the directions of the current flowing through the plurality of working coils according to an embodiment of the present disclosure.
FIG. 30 is a view illustrating a third example of the circuit diagram for controlling the directions of the current flowing through the plurality of working coils according to an embodiment of the present disclosure.
FIG. 31 is a view illustrating a fourth example of the circuit diagram for controlling the directions of the current flowing through the plurality of working coils according to an embodiment of the present disclosure.

### MODE FOR CARRYING OUT THE INVENTION

Hereinafter, example embodiments according to the present disclosure will be described in detail with reference to the accompanying drawings. In the drawings, the same reference numerals are used to denote the same or similar elements.

The suffixes "module" and "unit" for components used in the description below are assigned or mixed in consideration of easiness in writing the specification and do not have distinctive meanings or roles by themselves.

In the following description, "connection" between components includes not only direct connection of the components, but also indirect connection through at least one other component, unless otherwise specified.

Hereinafter, an induction heating type cooktop and an operation method thereof according to an embodiment of the present disclosure will be described. For convenience of description, the "induction heating type cooktop" is referred to as a "cooktop."

Hereinafter, an induction heating type cooktop according to an embodiment of the present disclosure will be described.

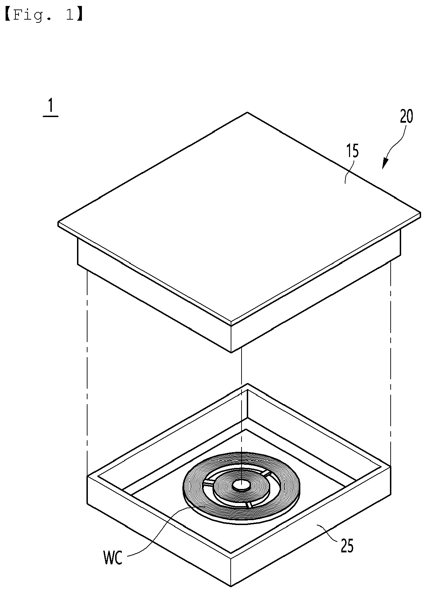

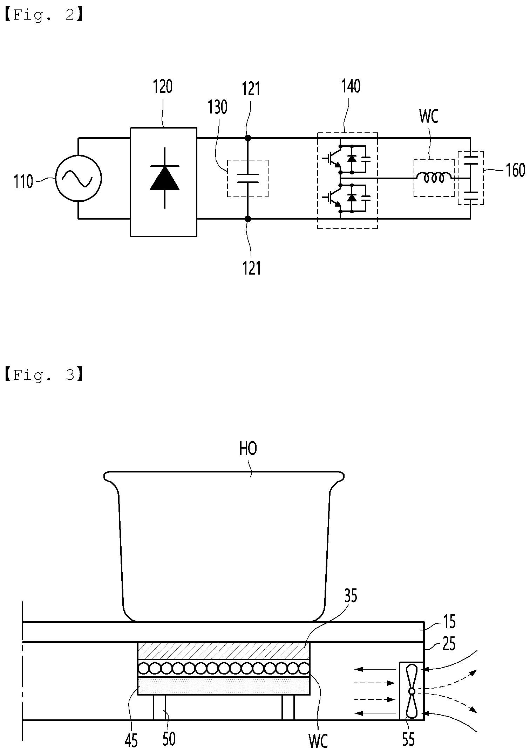

FIG. 1 is a perspective view of an induction heating type cooktop according to an embodiment of the present disclosure, and FIG. 2 is a cross-sectional view illustrating the induction heating type cooktop and an object to be heated according to an embodiment of the present disclosure.

Referring to FIG. 1, an induction heating type cooktop 1 according to an embodiment of the present disclosure includes a case 25 (e.g., housing), a cover plate 20, and a working coil WC.

The case 25 can define an outer appearance of the cooktop 1. The case 25 can protect components provided inside the cooktop 25 from the outside.

The working coil WC, an inverter 140 (see FIG. 3) that drives the working coil WC, a resonance capacitor 160 that resonates with working coils of the working coil WC (see FIG. 3), and switches S1 and S2 can be provided inside the case 25. For example, the case 25 can be provided with other components, e.g., various devices related to driving of the working coil WC.

The cover plate 20 can be coupled to an upper end of the case 25 to define an outer appearance of the cooktop 1 together with the case 25.

An upper plate 15 on which an object HO to be heated such as a cooking container can be disposed on the cover plate 20. The object HO to be heated can be placed on the upper plate 15.

The upper plate 15 can be made of a glass material (e.g., ceramics glass).

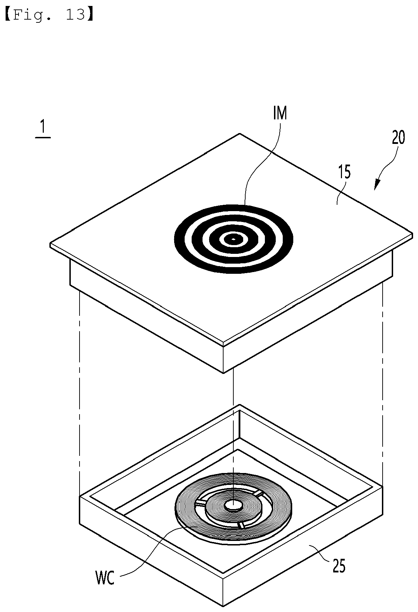

In addition, the upper plate 15 can be provided with an input interface that receives an input from a user to transmit the input to a control module (e.g., a controller, or a processor) for an input interface. Of course, the input interface can be provided at a position other than the upper plate 15. The input interface will be described in more detail in FIGS. 13 to 15.

The working coil WC can generate magnetic fields passing through the object HO to be heated. The working coil WC can generate magnetic fields passing through the object HO to be heated or the intermediate heating element IM (see FIG. 13), which will be described later.

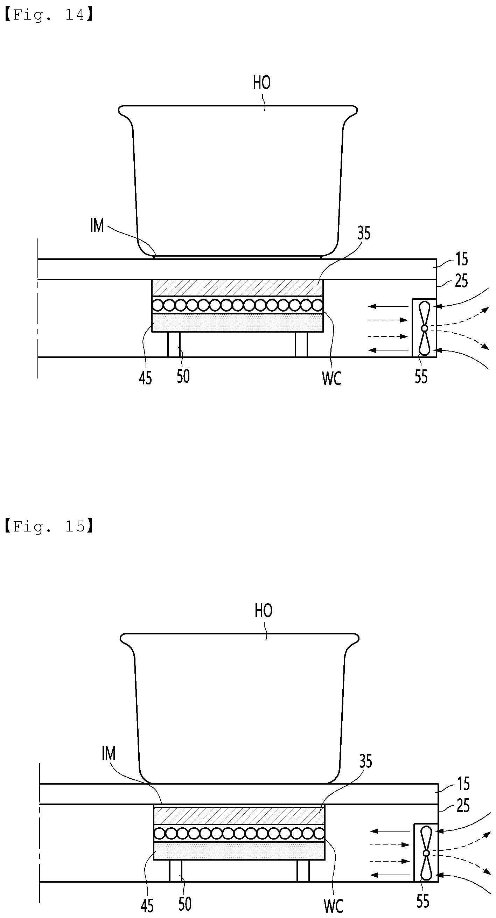

The cooktop 1 can further include at least some or all of an insulating material 35, a shielding plate 45, a support member 50, and a cooling fan 55. This structure will be described in detail with reference to FIGS. 14 to 15.

FIG. 3 is a circuit diagram of the induction heating type cooktop according to an embodiment of the present disclosure.

Referring to FIG. 3, the induction heating type cooktop can include at least some or all of a power supply 110, a rectifier 120, a DC link capacitor 130, an inverter 140, a working coil WC, and a resonance capacitor 160.

The power supply 110 can receive external power. Power received from the outside to the power supply 110 can be alternation current (AC) power.

The power supply 110 can supply an AC voltage to the rectifier 120.

The rectifier 120 is an electrical device for converting alternating current into direct current. The rectifier 120 converts the AC voltage supplied through the power supply 110 into a DC voltage. The rectifier 120 can supply the converted voltage to both DC ends 121.

An output terminal of the rectifier 120 can be connected to both of the DC ends 121. Each of the ends 121 of the DC output through the rectifier 120 can be referred to as a DC link. A voltage measured at each of the DC ends 121 is referred to as a DC link voltage.

The DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil WC so that high-frequency current flows through the working coil WC. The inverter 140 can apply current to at least one of the plurality of working coils WC1 and WC2. The inverter 140 can include a semiconductor switch, and the semiconductor switch can be an insulated gate bipolar transistor (IGBT) or a wide band gab (WBG) device. Since this is merely an example, the embodiment is not limited thereto. The WBG device can be silicon carbide (SiC) or gallium nitride (GaN). The inverter 140 drives the semiconductor switch to allow the high-frequency current to flow in the working coil WC, and thus, high-frequency magnetic fields are generated in the working coil WC.

The working coil WC can include at least first and second working coils WC1 and WC2, which generate magnetic fields for heating the object HO to be heated. Current can or may not flow through the working coil WC according to whether the switching element is driven. When the current flows through the working coil WC, the magnetic fields are generated. The working coil WC can heat a cooking appliance by generating the magnetic fields as the current flows.

One side of the working coil WC is connected to a connection point of the switching element of the inverter 140, and the other side is connected to the resonance capacitor 160.

The switching element is driven by a driver, and a high-frequency voltage is applied to the working coil WC while the switching element operates alternately each other by controlling a switching time output from the driver. In addition, since a turn on/off time of the switching element applied from the driver is controlled in a manner that is gradually compensated, the voltage supplied to the working coil WC is converted from a low voltage into a high voltage.

The resonance capacitor 160 can resonate with the working coils of the working coil WC.

The resonance capacitor 160 can be a component to serve as a buffer. The resonance capacitor 160 controls a saturation voltage increasing rate during the turn-off operation of the switching element to affect an energy loss during the turn-off time.

In the cooktop 1 expressed by the circuit diagram illustrated in FIG. 3, a resonance frequency is determined by an inductance value of the working coil WC and a capacitance value of the resonance capacitor 160. Then, a resonance curve can be formed around the determined resonance frequency, and the resonance curve can represent output power of the cooktop 1 according to a frequency band.

The cooktop 1 has a limitation in that the heating efficiency for a non-magnetic container is very low compared to the heating efficiency for a magnetic container. Thus, it is desirable to have a changeable resonance point that can be adjusted according to the type of object HO to be heated, a target output, etc.

The present disclosure is configured to control a resonance point by changing an inductance value of the working coil. Particularly, the present disclosure is configured to change a resonance control point of the inverter 140 by changing the inductance value of the working coil through a control of a coil connection method, rather than simple connection of a separate coil.

In order to simply connect the separate coil to the inverter 140, there is a minimum inductance required for the coil according to the specifications of the inverter 140. Thus, the separate coil should include at least about 3 turns to 4 turns, and thus, there is a limitation of increasing the volume and manufacturing cost of the device. However, in the present disclosure, one coil (e.g., a main coil) can be always connected to the inverter 140, and another coil (e.g., one or more sub-coils) can be selectively connected or disconnected to the one coil, which can operate according to a coil connection method, and thus, the other coil can have only one or two turns or coil windings. Hereinafter, the structure and operation method for controlling the coil connection method will be described.

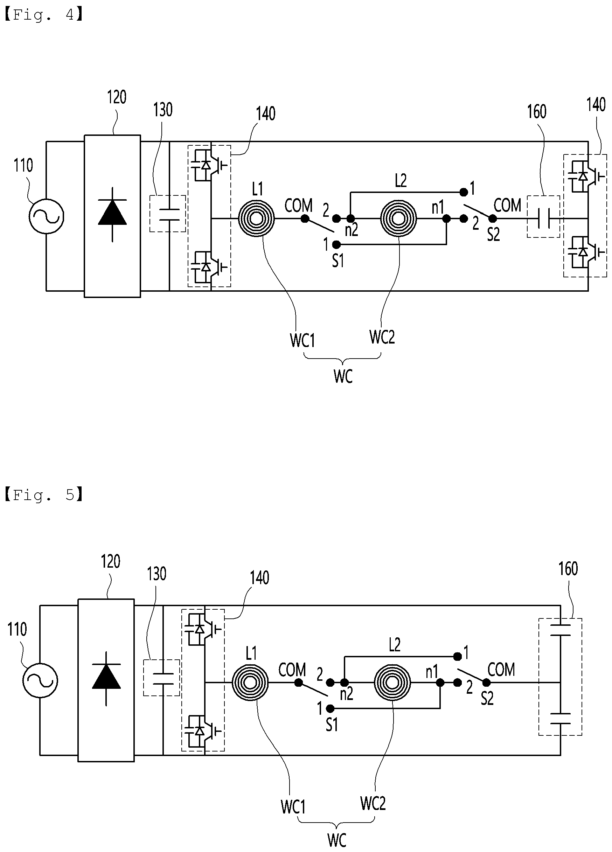

FIG. 4 is a circuit diagram of an induction heating type cooktop according to a first embodiment of the present disclosure.

Descriptions that are duplicated with those described in FIG. 3 will be omitted.

As illustrated in FIG. 4, according to the first embodiment, a cooktop 1 can further include switches S1 and S2. The switches S1 and S2 can include a first switch S1 and a second switch S2. Each of the first switch S1 and the second switch S2 can be a three-terminal relay as illustrated in the drawing, but since this is only an example for convenience of explanation, it is reasonable that the first switch S1 and the second switch S2 are not limited thereto. Each of the first and second switches S1 S2 can be implemented as a plurality of two-terminal relays, electronic switches, etc.

The working coil WC can include a plurality of working coils, and the plurality of working coils can include at least a first working coil WC1 and second working coil WC2.

One end of the first working coil WC1 can be connected to the inverter 140, and the other end can be connected to the switch, particularly the first switch S1. The first working coil WC1 can be disposed between the inverter 140 and the first switch S1.

The first switch S1 can be disposed between the first working coil WC1 and the second working coil WC2. The first switch S1 can determine whether the first working coil WC1 and the second working coil WC2 are connected to each other.

Specifically, the first switch S1 can be constituted by a common terminal COM, a first terminal 1, and a second terminal 2. The common terminal COM of the first switch S1 can be connected to the first working coil WC1, the first terminal 1 can be connected a first point n1 between to the second working coil WC2 and the second switch S2, and the second terminal 2 can be connected to a second point n2 between the second working coil WC2 and the first switch S1.

The first switch S1 can connect the common terminal COM to the first terminal 1 or the second terminal 2. Thus, the first switch S1 can connect the first working coil WC1 to the first point n1 between the second working coil WC2 and the second switch S2 or the second point n2 between the second working coil WC2 and the first switch S1.

The second working coil WC2 can be disposed between the first switch S1 and the second switch S2. The second working coil WC2 can have one end connected to the first switch S1 and the other end connected to the second switch S2.

The second working coil WC2 can be selectively connected to the first working coil WC1 according to a state of each of the switches S1 and S2.

The second switch S2 can be disposed between the second working coil WC2 and the resonance capacitor 160. The second switch S2 can determine whether the second working coil WC2 and the resonance capacitor 160 are connected to each other.

Specifically, the second switch S2 can be constituted by a common terminal COM, a first terminal 1, and a second terminal 2. The common terminal COM of the second switch S2 can be connected to the resonance capacitor 160, the first terminal 1 can be connected to the second point n2 between the second working coil WC2 and the first switch S1, and the second terminal 2 can be connected to the first point n1 between the second working coil WC2 and the second switch S2.

The second switch S2 can connect the common terminal COM to the first terminal 1 or the second terminal 2. Thus, the second switch S2 can connect the resonance capacitor 160 to the first point n1 between the second working coil WC2 and the second switch S2 or the second point n2 between the second working coil WC2 and the first switch S1.

In the first embodiment, the inverter 140 can be implemented as a half-bridge.

FIG. 5 is a circuit diagram of an induction heating type cooktop according to a second embodiment of the present disclosure.

In the second embodiment, the inverter 140 can be implemented as a full-bridge, but the rest of the configuration is the same as the first embodiment, and duplicated descriptions will be omitted.

According to the first and second embodiments, the first working coil WC1 and the second working coil WC2 can be connected in series.

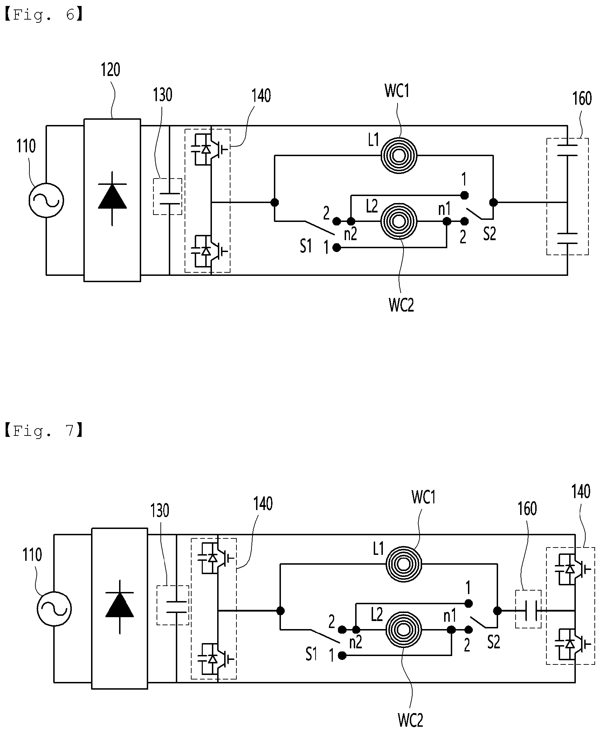

FIG. 6 is a circuit diagram of an induction heating type cooktop according to a third embodiment of the present disclosure, and FIG. 7 is a circuit diagram of an induction heating type cooktop according to a fourth embodiment of the present disclosure.

In the third and fourth embodiments, a first working coil WC1 and a second working coil WC2 can be connected in parallel.

Specifically, the first working coil WC1 and the second working coil WC2 are disposed between an inverter 140 and a resonance capacitor 160, and the first working coil WC1 and the second working coil WC2 can be connected in parallel.

The first switch S1 can have a common terminal COM connected to a contact point between the first working coil WC1 and the inverter 140, the first terminal 1 can be connected to a first point n1 between the second working coil WC2 and the second switch S2, and the second terminal 2 can be connected to a second point n2 between the second working coil WC2 and the first switch S1.

The second switch S2 can have a common terminal COM connected to a contact point between the first working coil WC1 and the resonance capacitor 160, the first terminal 1 can be connected to the second point n2 between the second working coil WC2 and the first switch S1, and the second terminal2 can be connected to the first point n1 between the second working coil WC2 and the second switch S2.

In the third embodiment, the inverter 140 can be implemented as a half-bridge.

As illustrated in FIG. 7, in the fourth embodiment, the inverter 140 can be implemented as a full-bridge, but the rest of the configuration is the same as the third embodiment, and duplicated descriptions will be omitted.

According to the first to fourth embodiments, the cooktop 1 can include switches S1 and S2 that selectively connect at least one of a plurality of working coils WC1 and WC2 to an inverter 140, and an inductance value of the inverter 140 can be changed according to a connection state of the switches S1 and S2. In addition, since the resonance frequency is changed as the inductance value of the inverter 140 is changed, a resonance curve can be also changed. A capacitance value of the resonance capacitor 160 can be fixed.

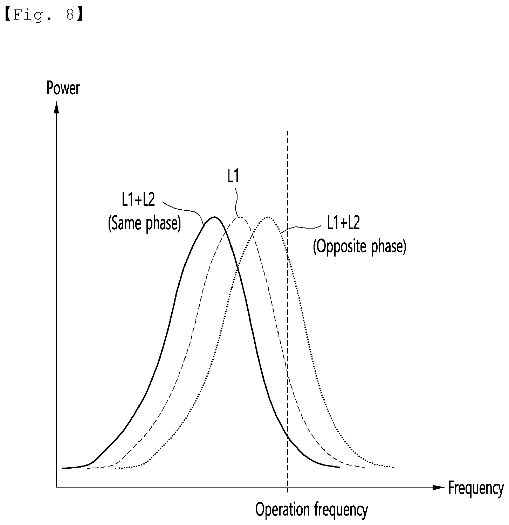

FIG. 8 is a graph illustrating a resonance curve in a cooktop according to an embodiment of the present disclosure.

According to the above-described embodiment of the present disclosure, a cooktop 1 can have three different resonance systems according to a connection state of switches S1 and S2, and the corresponding resonance curves can be as illustrated in FIG. 8.

The switches S1 and S2 can determine whether current is applied to the second working coil WC2. In addition, the inverter 140 can allow a current direction of at least one of the first and second working coils WC1 and WC2 to vary. A direction of current flowing through one of the first and second working coils WC1 and WC2 can be constant, and a direction of current flowing through the other can be variable or adjustable. The switches S1 S2 can change the current direction of the second working coil WC. Specifically, the direction of the current flowing through the first working coil WC1 can be constant, and the current can be controlled to flow or not flow in the second working coil WC2, and also, even when the current flows in the second working coil WC2, it can be controlled to be the same as or different from the direction of the current flowing through the first working coil WC1. For example, the direction of the current flowing through the first working coil WC1 can be constant, and the direction of the current flowing through the second working coil WC2 can be variable or adjustable.

Thus, the cooktop 1 according to an embodiment of the present disclosure has three resonance systems to operate in first, second and third operation modes. For example, a composite inductance of the plurality of working coils WC1 and WC2 can vary, or a magnetic field region can be changed according to the current flowing through the second working coil WC2.

In the first operation mode, both the first and second switches S1 and S2 can be connected to the second terminal 2 and both of the first and second working coils WC1 and WC2 can be energized. For example, in the first operation mode, the first switch S1 can connect the first working coil WC1 to the second point n2, and the second switch S2 can connect the resonance capacitor 160 to the first point n1.

The current can be applied in the same direction to the first working coil WC1 and the second working coil WC2. The magnetic fields generated in the first working coil WC1 and the magnetic fields generated in the second working coil WC2 can be combined. For example, the direction of the current applied to the first working coil WC1 and the second working coil WC2 in the first mode can be the same. Here, the resonance curve can be the same as a curve indicated by L1 + L2 (same phase) in FIG. 8.

In the second operation mode, both the first and second switches S1 and S2 can be connected to the first terminal 1 and both of the first and second working coils WC1 and WC2 can be energized. For example, in the second operation mode, the first switch S1 can connect the first working coil WC1 to the first point n1, and the second switch S2 can connect the resonance capacitor 160 to the second point n2.

Thus, the current can be applied in different directions to the first working coil WC1 and the second working coil WC2. The magnetic fields generated in the first working coil WC1 and the magnetic fields generated in the second working coil WC2 can be offset. For example, in the second mode, the directions of the current applied to the first working coil WC1 and the second working coil WC2 can be different from each other. Here, the resonance curve can be the same as a curve indicated by L1+L2 (opposite phase) in FIG. 8. For example, the resonance curve in the second mode can be shifted to the right, relative to the resonance curve in the first mode.

In the third operation mode, the current can be applied only to the first working coil WC1, and no current can be applied to the second working coil WC2, so that only the first working coil WC1 is energized. For example, the first switch S1 and the second switch S2 can simultaneously connect the first working coil WC1 and the resonance capacitor 160 to the first point n1 or the second point n2.

Thus, the current can be applied only to the first working coil WC1. Here, the resonance curve can be the same as a curve indicated by L1 in FIG. 8. For example, the resonance curve in the third mode can be between the resonance curve in the first mode and the resonance curve in the second mode.

For example, in the first, second and third operation modes, the current can be always applied to the first working coil WC1, and the current can be selectively applied to the second working coil WC2. In this respect, the first working coil WC1 can be a main working coil, and the second working coil WC2 can be a sub-working coil.

The first, second and third operation modes can be determined according to a target output, a material or size of the object HO to be heated, etc.

In a size of the composite inductance, a first composite inductance can be the largest in the first operation mode, and a second composite inductance can be the smallest in the second operation mode. In the third operation mode, a size of the third composite inductance can be less than that of the first composite inductance and greater than that of the second composite inductance.

As illustrated in FIG. 8, the cooktop 1 can have different resonance curves in the first, second and third operation modes, and thus can output different amounts of power at the same operation frequency.

For example, according to the embodiment of the present disclosure, the cooktop 1 has an advantage of widening a power control range when compared to the same frequency. In the cooktop 1 according to an embodiment of the present disclosure, the inverter 140 can be driven at a constant operation frequency while the output can be changed according to the current flowing through the second working coil WC2.

Specifically, referring to the curves illustrated in FIG. 8, when the operation frequency is the same, according to the connection state of the switches S1 and S2, when the direction of the current flowing through the second working coil WC2 is different from the direction of the current flowing through the first working coil WC1, the object HO to be heated can be heated at the first power output level. Also, when no current flows in the second working coil WC2, the object HO to be heated can be heated at a second power output level that is lower than the first power output level. Further, when the direction of the current flowing through the second working coil WC2 is the same as the direction of current flowing through the first working coil WC1, the object to be heated HO can be heated at a third power output level that is lower than the second power output level.

In addition, there is an advantage in that an optimal heating method is selected by changing the operation frequency according to the material, size, etc. of the object HO to be heated and/or changing the connection state of the plurality of working coils WC1 and WC2. In addition, the cooktop 1 can minimize the change in output power by changing the connection state of the plurality of working coils WC1 and WC2 together in order to minimize limitation in change of the output power due to the frequency change when the frequency change is required for the purpose of avoiding noise from adjacent burners, etc.

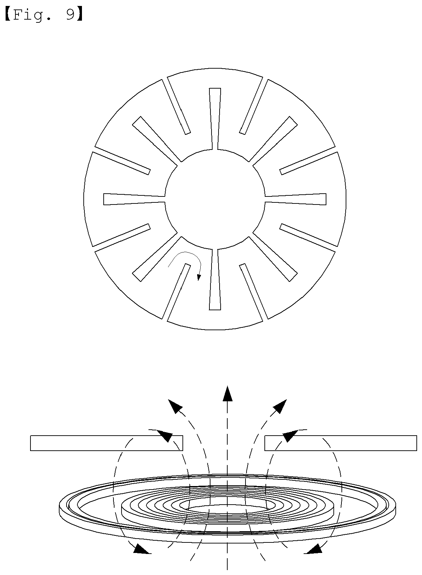

The cooktop 1 according to the first, second, third and fourth embodiments described above can further include an intermediate heating element IM, which will be described later. The intermediate heating element IM will be described in detail below. First, referring to FIGS. 9 to 11, magnetic fields when the cooktop 1 including the intermediate heating element IM can operate in the first to third modes will be described.

FIGS. 9 to 11 is a view illustrating a shape of magnetic fields generated in the cooktop provided with the intermediate heating element according to an embodiment of the present disclosure.

Specifically, the intermediate heating element IM can be placed higher than or over the plurality of working coils WC1 and WC2, and the magnetic fields generated in the plurality of working coils WC1 and WC2 can pass through the intermediate heating element IM. In each of FIGS. 9 to 11, a direction in which the current flowing in the intermediate heating element IM flows that is induced by the magnetic fields generated in the plurality of working coils WC1 and WC2 is illustrated above, and a state in which the magnetic fields generated in the plurality of working coils WC1 and WC2 passes through the intermediate heating element IM is illustrated below.

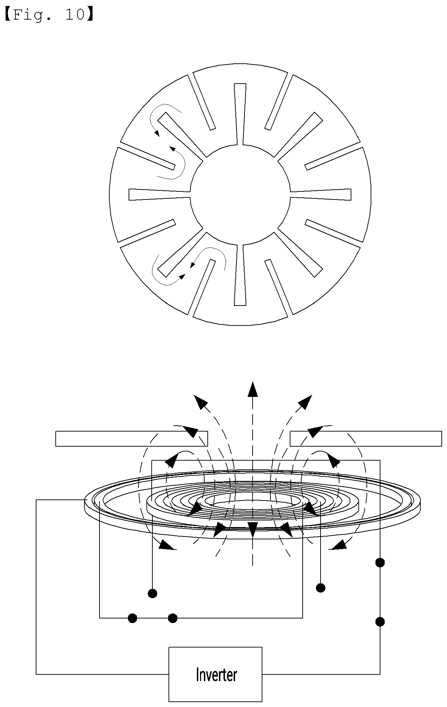

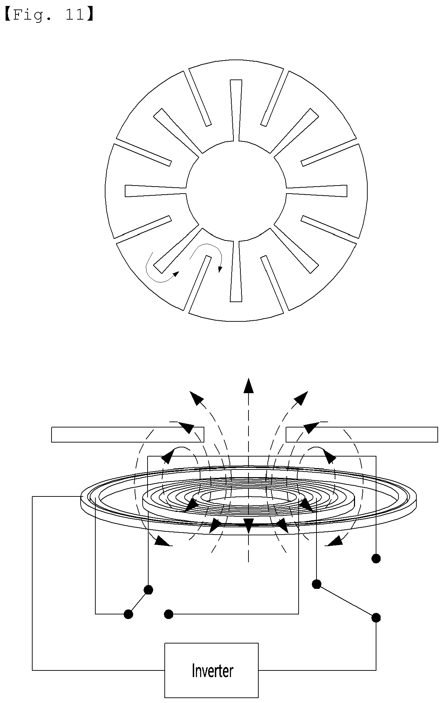

FIG. 9 illustrates a situation in which the current flows only in the first working coil WC1, and no current flows in the second working coil WC2, FIG. 10 illustrates a situation in which the current flows in opposite directions through the first working coil WC1 and the second working coil WC2, and FIG. 11 illustrates a situation in which the current flows in the same direction through the first working coil WC1 and the second working coil WC2.

Referring to FIG. 10, a phase difference between the first working coil WC1 and the second working coil WC2 can be 0 degrees, and the magnetic fields generated in the first working coil WC1 and the magnetic fields generated in the second working coil WC2 can be coupled in the intermediate heating element IM. Also, the different current induced in the intermediate heating element IM can effectively cancel each other out and the magnetic fields can be focused on the cooking container itself.

Referring to FIG. 11, a phase difference between the first working coil WC1 and the second working coil WC2 can be 180 degrees, and the magnetic fields generated in the first working coil WC1 and the magnetic fields generated in the second working coil WC2 can be offset in the intermediate heating element IM.

When the current in the same direction flows through the first working coil WC1 and the second working coil WC2, a first area of a loop generated in the intermediate heating element IM can be greater than a second area of a loop generated in the intermediate heating element IM when the current in the opposite direction flows through the first working coil WC1 and the second working coil WC2. In this way, the magnetic fields can be focuses on the intermediate heating element IM.

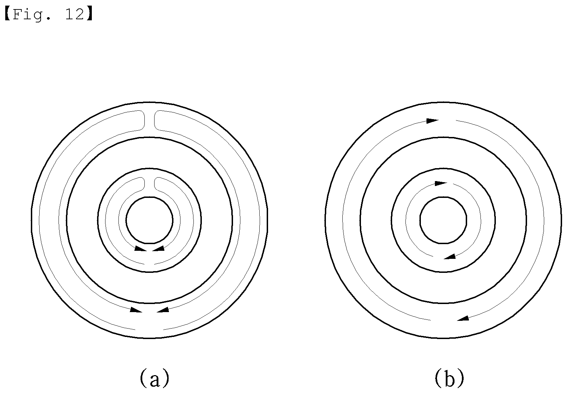

FIG. 12, including parts (a) and (b), is a view illustrating formation of a loop when the intermediate heating element is provided into two donut shapes or two ring shapes having different diameters according to an embodiment of the present disclosure.

As illustrated in FIG. 12, the intermediate heating element IM can be provided into two donut shapes or two ring shapes with different diameters. For example, the intermediate heating element IM can include a first intermediate heating element having a donut shape with a diameter of a first size and a second intermediate heating element having a donut shape with a diameter of a second size larger than the first size, and the first intermediate heating element can be disposed inside the second intermediate heating element.

Part (a) of FIG. 12 illustrates a loop generated in two concentric intermediate heating elements IM when currents flow through the first working coil WC1 and the second working coil WC2 in opposite directions, and part (b) of FIG. 12 illustrates a loop generated in two concentric intermediate heating elements IM when currents flow through the first working coil WC1 and the second working coil WC2 in the same direction.

As illustrated in part (a) of FIG. 12, when currents flow through the first working coil WC1 and the second working coil WC2 in opposite directions, the loops can be electrically separated from each other. On the other hand, as illustrated in part (b) of FIG. 12, when currents flow through the first working coil WC1 and the second working coil WC2 in the same direction, one large loop can be generated.

As described above, an amount of heat generated in the intermediate heating element IM can be controlled or adjusted. For example, as the area of the loop becomes smaller, the magnetic fields generated in the working coil WC can have a smaller coupling force with the intermediate heating element IM, and thus, the magnetic fields coupled to the object HO itself can increased (e.g., the magnetic fields can be focused on the magnetic object). In addition, as the magnetic field generated in the working coil WC has a smaller coupling force with the intermediate heating element IM, heat generation of the intermediate heating element IM can be minimized.

As the area of the loop increases, the magnetic fields generated in the working coil WC can provide a larger coupling force with the intermediate heating element IM, and thus, the intermediate heating element IM can be coupled to many magnetic fields (e.g., the magnetic fields can be focused on the intermediate heating element IM). Thus, since the intermediate heating element IM generates heat, the object HO to be heated can be heated through the intermediate heating element IM.

Thus, when the object HO to be heated is the non-magnetic material, the switches S1 and S2 can allow current to flow through the first working coil WC1 and the second working coil WC2 in the same direction, and when the object HO to be heated is the magnetic material, current in opposite directions can be controlled to flow through the first working coil WC1 and the second working coil WC2.

In the above-described embodiments, the first working coil WC1 can be disposed inside the second working coil WC2. For example, both the first working coil WC1 and the second working coil WC2 can have the donut shape, but the diameter of the first working coil WC1 can be less than that of the second working coil WC2. In addition, the number of turns of the second working coil WC2 can be less than or equal to the number of turns of the first working coil WC1.

Alternatively, the first working coil WC1 and the second working coil WC2 can be disposed side by side at left and right sides, respectively, and the number of turns of the first working coil WC1 and the second working coil WC2 can be the same.

However, since this is only an example, it is reasonable that it is not limited thereto.

Next, the cooktop 1 including the intermediate heating element IM will be described in more detail.

FIG. 13 is a view for explaining an induction heating type cooktop according to another embodiment of the present disclosure. FIG. 14 is a cross-sectional view illustrating the induction heating type cooktop and an object to be heated according to an embodiment. FIG. 15 is a cross-sectional view illustrating an induction heating type cooktop and an object to be heated according to another embodiment.

First, referring to FIG. 13, an induction heating type cooktop 1 according to an embodiment of the present disclosure includes a case 25 (e.g., a housing), a cover plate 20, a working coil WC, and an intermediate heating element IM.

The working coil WC can be installed in the case 25.

For reference, in the case 25, in addition to the working coil, various devices related to driving of the working coil (e.g., a power supply that provides AC power, a rectifier that rectifies the AC power of the power supply into DC power, an inverter that converts the DC power rectified by the rectifier into resonance current through a switching operation to provides the resonance current to the working coil, a control module (e.g., a controller, or a processor) that controls operations of various devices within the induction heating type cooktop 1, a relay or semiconductor switch that turns on or off the working coil, etc.)can be installed in the case 25.

The cover plate 20 can be coupled to an upper end of the case 25 and provided with an upper plate 15 on which an object to be heated is disposed on a top surface thereof.

Specifically, the cover plate 20 can include the upper plate 15 for placing an object to be heated, such as a cooking vessel (e.g., a pot or a pan) thereon. For example, an object to be heated can be placed on the upper plate 15.

Here, the upper plate 15 can be made of a glass material (e.g., ceramics glass).

In addition, the upper plate 15 can be provided with an input interface that receives an input from a user to transmit the input to a control module (e.g., a controller or a processor) for an input interface. Of course, the input interface can be provided at a position other than the upper plate 15.

For reference, the input interface can be a module for inputting a desired heating intensity or driving time of the induction heating type cooktop 1 and can be variously implemented with a physical button or a touch panel. Also, the input interface can include, for example, a power button, a lock button, a power level adjustment button (+, -), a timer adjustment button (+, -), a charging mode button, and the like. In addition, the input interface can transmit the input received from the user to the control module for the input interface, and the control module for the input interface can transmit the input to the aforementioned control module (e.g., the control module for the inverter). In addition, the aforementioned control module can control the operations of various devices (e.g., the working coil) based on the input (e.g., a user input) provided from the control module for the input interface.

Information about whether the working coil WC is being driven and the heating intensity (e.g., thermal power) can be visually displayed on the upper plate 15 in a shape of a burner. The shape of the burner can be indicated by an indicator constituted by a plurality of light emitting devices (e.g., LEDs) provided in the case 25.

The working coil WC can be installed inside the case 25 to heat the object to be heated.

Specifically, the working coil WC can be driven by the aforementioned control module, and when the object to be heated is disposed on the upper plate 15, the working coil WC can be driven by the control module.

In addition, the working coil WC can directly heat an object (e.g., a magnetic body) having magnetism and can indirectly heat an object (e.g., a nonmagnetic body) through an intermediate heating element IM.

In addition, the working coil WC can heat the object in an induction heating manner and can be provided to overlap with the intermediate heating element IM in a longitudinal direction (e.g., a vertical direction or an upward and downward direction).

For reference, although the structure in which one working coil WC is installed in the case 25 is illustrated in FIG. 13, the embodiment is not limited thereto. For example, one or more working coils WC can be installed in the case 25. The intermediate heating element IM can be installed to correspond to the working coil WC. The number of intermediate heating bodies IM and the number of working coils WC can be the same.

The intermediate heating element IM can be installed on the upper plate 15. The intermediate heating element IM can be applied on the upper plate 15 to heat the non-magnetic body among the objects to be heated. The intermediate heating element IM can be inductively heated by the working coil WC.

The intermediate heating element IM can be disposed on a top surface or a bottom surface of the upper plate 15. For example, as illustrated in FIG. 14, the intermediate heating element IM can be installed on the top surface of the upper plate 15, or as illustrated in FIG. 15, the intermediate heating element IM can be installed on the bottom surface of the upper plate 15. Also, according to an embodiment, the intermediate heating element IM can be embedded within the upper plate 15.

The intermediate heating element IM can be provided to overlap with the working coil WC in the longitudinal direction (e.g., the vertical direction or the upward and downward direction). Thus, the heating of the objects to be heated can be possible regardless of the arrangement positions and types of the objects to be heated.

Also, the intermediate heating element IM can have at least one of magnetic and non-magnetic properties (e.g., a magnetic property, a nonmagnetic property, or both the magnetic and nonmagnetic properties).

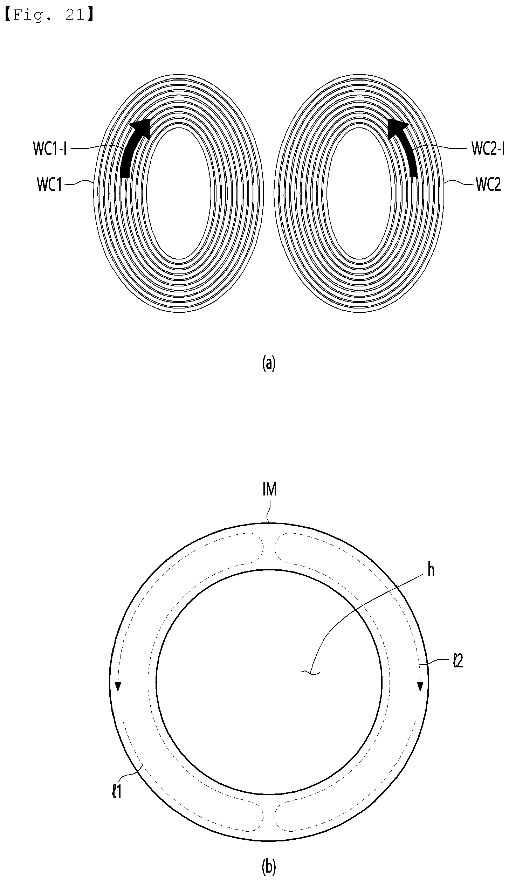

In addition, the intermediate heating element IM can be made of a conductive material (e.g., aluminum), and as illustrated in the drawings, a plurality of rings having different diameters can be installed on the upper plate 15 in a repeated shape, but is not limited thereto. For example, the intermediate heating element IM can be made of a material other than a conductive material. Also, the intermediate heating element IM can be provided in a shape other than the shape in which the plurality of rings having different diameters are repeated. Various shapes of the intermediate heating element IM will be described in more detail in FIGS. 21 to 27.

For reference, although one intermediate heating element IM is illustrated in FIGS. 14 and 15, the embodiment is not limited thereto. For example, a plurality of thin films can be installed, but for convenience of description, one intermediate heating element IM can be installed as an example.

More details of the intermediate heating element IM will be described later.

Next, referring to FIGS. 14 and 15, the induction heating type cooktop 1 according to an embodiment of the present disclosure can further include at least some or all of a thermal insulation material 35, a shielding plate 45, a support member 50, and a cooling fan 55.

The insulating material 35 can be provided between the upper plate 15 and the working coil WC.

Specifically, the insulating material 35 can be mounted under the upper plate 15, and the working coil WC can be disposed below the insulating material 35.

The insulating material 35 can prevent heat generated while heating the object HO, by the driving of the working coil WC or intermediate heating element IM, from being transmitted to the working coil WC.

For example, when the intermediate heating element IM or the object HO to be heated is heated by electromagnetic induction of the working coil WC, the heat of the intermediate heating element IM or the object HO to be heated can be transferred to the upper plate 15, and then, the heat of the upper plate 15 can be transferred to the working coil WC again to damage the working coil WC.

The insulating material 35 can block the heat transferred to the working coil WC as described above to prevent the working coil WC from being damaged by the heat, and furthermore, prevent heating performance of the working coil WC from being deteriorated.

For reference, although it is not an essential component, a spacer can be installed between the working coil WC and the insulating material 35.

Specifically, the spacer can be inserted between the working coil WC and the insulating material 35 so that the working coil WC and the insulating material 35 are not in directly contact with each other. Thus, the spacer can prevent the heat generated while the intermediate heating element IM or the object HO to be heated by the driving of the working coil WC from being transmitted to the working coil WC through the insulating material 35.

For example, since the spacer partially shares the role of the insulating material 35, a thickness of the insulating material 35 can be minimized, and thus, an interval between the object HO to be heated and the working coil WC can be minimized (e.g., an air gap can be provided, which also acts as an insulator while reducing material costs and weight).

In addition, the spacer can be provided in plurality, and the plurality of spacers can be disposed to be spaced apart from each other between the working coil WC and the insulating material 35. Thus, air suctioned into the case 25 by a cooling fan 55 to be described later can be guided to the working coil WC by the spacers.

For example, the spacers can guide the air introduced into the case 25 by the cooling fan 55 to be properly transferred to the working coil WC, thereby improving cooling efficiency of the working coil WC.

The shielding plate 45 can be mounted under the working coil WC to block magnetic fields generated downward when the working coil WC is driven.

Specifically, the shielding plate 45 can block the magnetic fields generated downward when the working coil WC is driven and can be supported upward by the support member 50.

The support member 50 can be installed between a bottom surface of the shielding plate 45 and the lower plate of the case 25 to support the shielding plate 45 upward.

Specifically, the support member 50 can support the shielding plate 45 upward to indirectly support the insulating material 35 and the working coil WC upward, and thus, the insulating material 35 can be in close contact with the upper plate 15.

As a result, the interval between the working coil WC and the object HO to be heated can be constantly maintained.

For reference, the support member 50 can include, for example, an elastic body (e.g., a spring) for supporting the shielding plate 45 upward, but is not limited thereto. In addition, since the support member 50 is not an essential component, the support member 50 can be omitted from the induction heating type cooktop 1.

The cooling fan 55 can be installed inside the case 25 to cool the working coil WC.

Specifically, the cooling fan 55 can be controlled to be driven by the above-described control module and can be installed on a sidewall of the case 25. Of course, the cooling fan 55 can be installed at a position other than the sidewall of the case 25, but in the present disclosure, for convenience of explanation, the structure in which the cooling fan 55 is installed on the sidewall of the case 25 will be described as an example.

In addition, as illustrated in FIGS. 14 and 15, the cooling fan 55 can suck air from the outside of the case 25 to deliver the air to the working coil WC or can move or push air (particularly, heated air) inside the case 25 to the outside, in order to discharge the heated air outside of the case 25.

As a result, efficient cooling of the components (in particular, the working coil WC) inside the case 25 is possible.

Also, as described above, the air outside the case 25 delivered to the working coil WC by the cooling fan 55 can be guided to the working coil WC by the spacers. Thus, the direct and efficient cooling of the working coil WC is possible, in order to improve durability of the working coil WC (e.g., improvement in durability due to prevention of thermal damage).

The intermediate heating element IM can be a material having a resistance value that is capable of being heated by the working coil WC.

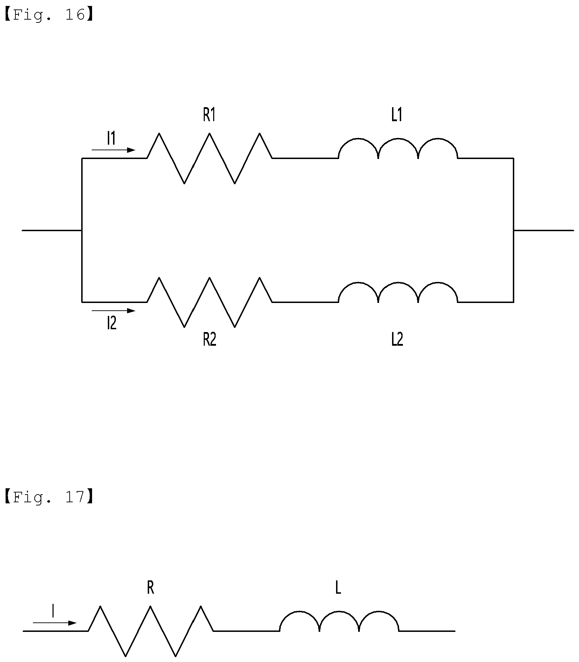

FIGS. 16 and 17 are views for explaining a change in impedance between the intermediate heating element and the object to be heated according to kinds of objects to be heated.

A thickness of the intermediate heating element IM can be inversely proportional to the resistance value (e.g., a surface resistance value) of the intermediate heating element IM. For example, as the thickness of the intermediate heating element IM decreases, the resistance value (e.g., surface resistance value) of the intermediate heating element IM increases. Thus, characteristics of the intermediate heating element IM can be changed to a load that can be heated.

For reference, the intermediate heating element IM can have a thickness of, for example, about 0.1 um to about 1,000 µm, but is not limited thereto.

The intermediate heating element IM having such characteristics can be present to heat the nonmagnetic body, and thus, impedance characteristics between the intermediate heating element IM and the object HO to be heated can be changed according to whether the object HO to be heated disposed on the upper plate 15 is a magnetic body or nonmagnetic body.

First, the situation in which the object HO to be heated is the magnetic body will be described as follows.

When the magnetic object HO to be heated is disposed on the upper plate 15, and the working coil WC is driven, a resistance component R1 and an inductor component L1 of the object HO to be heated, which has the magnetism as illustrated in FIG. 16) can form an equivalent circuit with a resistance component R2 and an inductor component L2 of the intermediate heating element IM.

In this situation, the impedance (e.g., impedance composed by R1 and L1) of the object HO to be heated, which has the magnetism, in the equivalent circuit can be less than that of the intermediate heating element IM (e.g., the impedance composed by R2 and L2).

Thus, when the equivalent circuit as described above is formed, the magnitude of the eddy current I1 applied to the magnetic object HO to be heated can be greater than the magnitude of the eddy current I2 applied to the intermediate heating element IM. Thus, most of the eddy current generated by the working coil WC can be applied to the object HO to be heated, and thus, the object HO to be heated can be heated.

For example, when the object HO to be heated is the magnetic body, the above-described equivalent circuit can be formed, and thus, most of the eddy current can be applied to the object HO to be heated. As a result, the working coil WC can directly heat the object HO.

Of course, some eddy current can be also applied to the intermediate heating element IM to slightly heat the intermediate heating element IM, and thus, the object HO to be heated can be indirectly heated by the intermediate heating element IM. In this situation, the working coil WC can be a main heating source, and the intermediate heating element IM can be a secondary heating source. However, when compared to a degree of direct heating of the object HO by the working coil WC, a degree of indirect heating of the object HO by the intermediate heating element IM may not be significant.

Next, the situation in which the object to be heated is the nonmagnetic body will be described as follows.

When the object HO is a non-magnetic object and is disposed on the upper plate 15, and the working coil WC is driven, there is no impedance in the nonmagnetic object HO to be heated, and the intermediate heating element IM can have an impedance. For example, the resistance component R and the inductor component L can exist only in the intermediate heating element IM.

Therefore, when the nonmagnetic object HO to be heated is disposed on the upper plate 15 and the working coil WC is driven, as illustrated in FIG. 17, the resistance component R and the inductor component L of the intermediate heating element IM can form an equivalent circuit.

Thus, the eddy current I can be applied only to the intermediate heating element IM, and eddy current may not be applied to the object HO itself, which does not have magnetism. More specifically, the eddy current I generated by the working coil WC can be applied only to the intermediate heating element IM, and thus, the intermediate heating element IM can be heated.

For example, when the object HO to be heated is the nonmagnetic body, as described above, the eddy current I can be applied to the intermediate heating element IM to heat the intermediate heating element IM, and the object HO to be heated, which does not have magnetism, can be indirectly heated by the intermediate heating element IM heated by the working coil WC. In this situation, the intermediate heating element IM can be a main heating source.

In summary, the object HO can be directly or indirectly heated by a single heat source, which is called the working coil WC, regardless of whether the object HO is the magnetic body or the non-magnetic body. For example, when the object HO is the magnetic body, the working coil WC can directly heat the object HO itself, and when the object HO is the non-magnetic body, the intermediate heating element IM heated by the working coil WC can indirectly heat the object HO.

As described above, the induction heating type cooktop 1 according to the embodiment of the present disclosure can heat both the magnetic body and the nonmagnetic body, regardless of the arrangement position and type of the object HO. Thus, the user can place the object to be heated on any heating area on the top plate 15 without needing to determine whether the object HO is the magnetic body or the nonmagnetic body, thereby improving ease of use.

In addition, the induction heating type cooktop 1 according to an embodiment of the present disclosure can directly or indirectly heat the object to be heated with the same heat source(e.g., the same working coil WC), and thus, there is no need to provide a separate heating plate or a radiant heater. Thus, it is possible to not only improve heating efficiency but also reduce material costs.

However, as described above, when the object HO to be heated, which is a magnetic body, is heated, the upper plate 15 can be overheated to cause a safety problem.

In addition, when the object HO to be heated is the magnetic body, since not only the object HO but also the intermediate heating element IM are heated, there is a limitation in that heating efficiency of the object HO is slightly deteriorated. Thus, when the object HO reduces the magnetic fields coupled to the intermediate heating element IM, there is a disadvantage in that an output for the object HO to be heated, which is a non-magnetic, is reduced.

Therefore, the cooktop 1 according to an embodiment of the present disclosure can concentrate the magnetic fields to the object HO to be heated when heating the magnetic body and can concentrate the magnetic fields to the intermediate heating element IM when heating the non-magnetic body. In other words, the magnetic fields can be dynamically changed based on what type of object HO is being used. For example, when the object HO is magnetic, the magnetic fields can be focused on the object HO itself, and when the object HO is non-magnetic, the magnetic fields can be focused on the intermediate heating element IM.

Particularly, the cooktop 1 can change a loop of induced current generated in the intermediate heating element IM to control a magnetic field concentration area. For this, the working coil WC can be constituted by a plurality of working coils. The working coil WC can include at least two working coils. For example, the working coil WC can include a first working coil and a second working coil. However, this is only an example, and the working coil WC can include three or more working coils.

The plurality of working coils, for example, the first working coil and the second working coil can generate magnetic fields that pass through at least the object HO to be heated or the intermediate heating element IM.

The cooktop 1 according to an embodiment of the present disclosure can control the magnetic field concentration area by controlling current flowing through the working coil WC, for example current flowing through the plurality of working coils.

The cooktop 1 can control the current flowing through the plurality of working coils according to the type of object HO to be heated. In this specification, the object HO to be heated can refer to a cooking container(e.g., a pot or a pan, etc.).

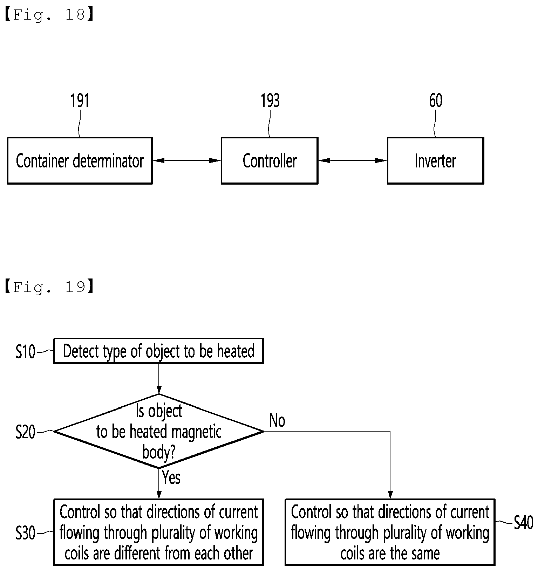

FIG. 18 is a control block diagram illustrating a method for controlling an inverter according to an object to be heated in the induction heating type cooktop according to an embodiment of the present disclosure.

FIG. 18 illustrates an example of only some components that are used to explain an operation method of the cooktop 1 according to the object HO to be heated, and some of the components illustrated in FIG. 18 can be omitted, or other components can be further provided.

The cooktop 1 can include a container determinator 191, a controller 193 (e.g., a processor), and an inverter 60. The inverter 60 can be the same as the inverter 140 described in FIGS. 1 to 12.

The container determinator 191 can determine the type of the object HO to be heated, for example the type of a cooking container 1. The container determinator 191 can determine a material of the object HO to be heated. In summary, the container determinator 191 can acquire the type of the object HO to be heated or the material of the object HO to be heated. The type of the object HO to be heated can be a concept including a material of the cooking container 1. In addition, the container determinator 191 can determine a material of the object HO to be heated.

A method for determining the type of the object to be heated through the container determinator 191 can vary.

The inverter 60 can include a plurality of switching elements driven to allow current to flow through the working coil WC. For example, the plurality of switching elements can be SiC (silicon carbide) elements, but is not limited thereto. For example, the plurality of switching elements can be GaN elements. For example, the plurality of switching elements can be wide band-gap (WBG) elements.

The inverter 60 can control a first direction of first current flowing through the first working coil and a second direction of second current flowing through the second working coil so that the loop generated in the intermediate heating element IM is changed in size. The inverter 60 can control the first direction of the first current flowing through the first working coil and the second direction of the second current flowing through the second working coil.

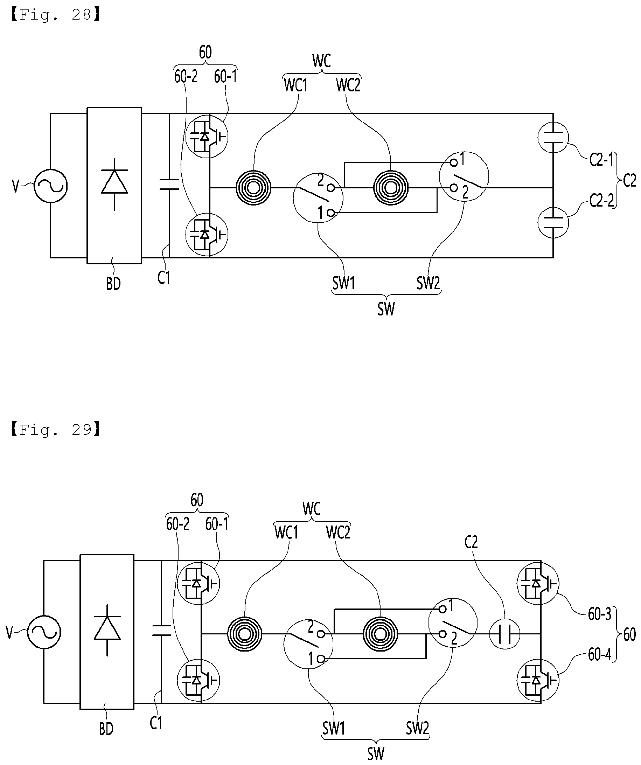

The inverter 60 will be described in more detail in FIGS. 28 to 31.

The inverter 60 can control the first direction of the first current and the second direction of the second current according to the type or size of object HO to be heated, and thus, an area of the loop generated by the current induced in the intermediate heating element IM can be changed.

The controller 193 can control an operation of the cooktop 1. The controller 193 can control each component provided in the cooktop 1 such as a container determinator 191 and the inverter 60.

FIG. 19 is a flowchart illustrating an operating method of the cooktop according to an embodiment of the present disclosure.

The cooktop 1 can detect the type of object HO to be heated (S10).

The type of object HO to be heated can refer to a material of the object HO to be heated.

For example, the cooktop 1 can detect at least one of the material or size of the cooking container. The cooktop 1 can determine whether the object HO to be heated is a magnetic body (S20).

For example, the cooktop 1 can determine whether the object HO to be heated is a magnetic body or a non-magnetic body. Thus, the cooktop 1 can determine whether the object HO to be heated is the non-magnetic body according to an embodiment.

If the object HO to be heated is the magnetic body, the cooktop 1 can control the directions of the current flowing through the plurality of working coils in different manners (S30).

In this situation, the cooktop 1 can adjust a phase difference of the current flowing through the plurality of working coils to 180 degrees.

If the object HO to be heated is not the magnetic body, the cooktop 1 can equally control the directions of the current flowing through the plurality of working coils (S40).

For example, if the object HO to be heated is the non-magnetic body, the cooktop 1 can equally control the current flowing through the plurality of working coils to flow in the same direction (S40).

In this situation, the cooktop 1 can adjust the phase difference of the current flowing through the plurality of working coils to be 0 degrees.

For example, the inverter 60 can control the phase difference between the first current WC1-I and the second current WC2-I to be 0 degrees or 180 degrees according to the type of object HO to be heated.

When the object HO to be heated is the magnetic body, the inverter 60 can be driven so that the first direction of the first current WC1-I flowing through the first working coil WC1 and the second direction of the second current WC2-I flowing through the second working coil WC2 are different from each other, and when the object HO to be heated is the non-magnetic body, the inverter can be driven so that the first direction and the second direction are the same.

When the directions of the current flowing through the plurality of working coils are different from each other, the direction of the current induced in the intermediate heating element IM by each of the plurality of working coils can be different, and thus, the induced current can be electrically separated to generate two different sub-loops. As a result, a combined area of the sub-loop is less than that of the main loop that is generated when the directions of the current flowing through the plurality of working coils are the same, which will be described later.

When the directions of the current flowing through the plurality of working coils are the same, the direction of the current induced in the intermediate heating element IM by each of the plurality of working coils can be the same, and thus, the induced current can generate one large loop. As a result, an area of the loop is greater than a combined area of the sub-loops that are generated when the directions of the current flowing through the plurality of working coils described above are different from each other.

In other words, when the area of the loop generated in the intermediate heating element IM is smaller, then the coupling force with the magnetic field is smaller, and when the area of the loop is larger, then the coupling strength with the magnetic fields is greater. Thus, the cooktop 1 can control a magnetic field concentration area by controlling the phases of the plurality of working coils.

The cooktop 1 can selectively heat the intermediate heating element IM by controlling the area of the loop by controlling the directions of the current flowing through the plurality of working coils. Particularly, a first area (size) of the loop generated in the intermediate heating element IM when the object HO to be heated is the magnetic body can be less than a second area (size) of the loop generated in the intermediate heating element when the object HO to be heated is the non-magnetic body.

For example, the cooktop 1 can control the coupling force of the magnetic fields generated from the working coil WC and the intermediate heating element IM to concentrate the magnetic fields on the object HO itself or the intermediate heating element IM. Thus, the cooktop 1 can directly heat the object HO or indirectly heat the object HO by directly heating the intermediate heating element IM according to the type of object HO to be heated. The cooktop 1 can maximize an output for each of the magnetic and non-magnetic bodies by changing the magnetic field distribution according to the type of the object HO.

In FIG. 19, only the cooktop 1 can control the current direction of the plurality of working coils WC1 and WC2 according to the material of the object HO to be heated, but the current direction of the plurality of working coils WC1 and WC2 can be controlled according to a size of the object HO to be heated HO or a target output.

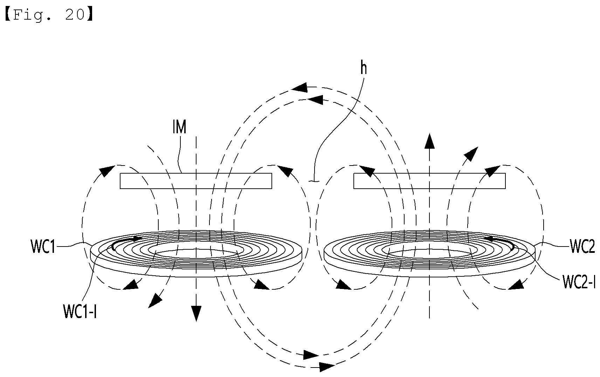

Next, with reference to FIGS. 20 to 23, the loop generated in the intermediate heating element IM according to the directions of the current flowing through the plurality of working coils will be described in detail.

Hereinafter, it is assumed that the plurality of working coils include the first working coil WC1 and the second working coil WC2.

FIG. 20 is a view illustrating a state of the magnetic fields when the currents in the plurality of working coils flow in different directions, and FIG. 21 is a view illustrating a state of the loop generated in the intermediate heating element when the currents in the plurality of working coils flow in different directions.

The inverter 60 can control the first direction of the first current WC1-I flowing through the first working coil WC1 and the second direction of the second current WC2-I flowing through the second working coil WC2 so that the directions are different from each other. As illustrated in FIG. 20, the first direction can be a clockwise direction, and the second direction can be a counterclockwise direction. However, this is only an example, and the first direction can be a counterclockwise direction, and the second direction can be a clockwise direction.

When the first current WC1-I flows in the clockwise direction in the first working coil WC1, the magnetic fields can pass downward through a central portion of the first working coil WC1, and a portion of the magnetic fields passing through the central portion can move to the outside of the first working coil WC1 and then rotate again along a path that passes through the central portion from the top to the bottom. For example, when the first current WC1-I flows in the clockwise direction in the first working coil WC1, the magnetic fields can rotate from the outside to the inside.

When the second current WC2-I flows in the counterclockwise direction in the second working coil WC2, the magnetic fields can pass upward through a central portion of the second working coil WC2, and a portion of the magnetic fields passing through the central portion can move to the outside of the second working coil WC2 and then rotate again along a path that passes through the central portion from the bottom to the top. For example, when the second current WC2-I flows in the counterclockwise direction in the second working coil WC2, the magnetic fields can rotate from the inside to the outside.

Thus, the magnetic fields can overlap with each other in a central region of the working coil WC, and the magnetic fields can be offset in an outer region.

FIG. 21 is a view illustrating a state in which the working coil WC and the intermediate heating element IM of FIG. 20 are distinguished from each other. For example, part (a) of FIG. 21 is a view illustrating the working coil WC of FIG. 20. As described above, the first current WC1-I rotates in the clockwise direction, and the second current WC2-I rotates in the counterclockwise direction.

Part (b) of FIG. 21 is a view illustrating the intermediate heating element IM of FIG. 20 and illustrates a flow of induced current by magnetic fields generated in the first and second working coils WC1 and WC2. The induced current flows in the counterclockwise direction in the intermediate heating element IM due to the magnetic fields generated in the first working coil WC1, and the induced current flows in the clockwise direction in the intermediate heating element IM due to the magnetic fields generated in the second working coil WC2. For example, the induced current by the first working coil WC1 and the induced current by the second working coil WC2 can flow in different directions, and thus, the loops generated by each induced current can be electrically separated from each other. For example, when the current induced in the intermediate heating element IM flows in different directions, the loops can be separately generated at left and right sides of the intermediate heating element IM. For example, as illustrated in part (b) of FIG. 21, a first loop 11 generated by the current induced by the first working coil WC1 and a second loop 12 generated by the current induced by the second working coil WC2 can be generated in the intermediate heating element IM.

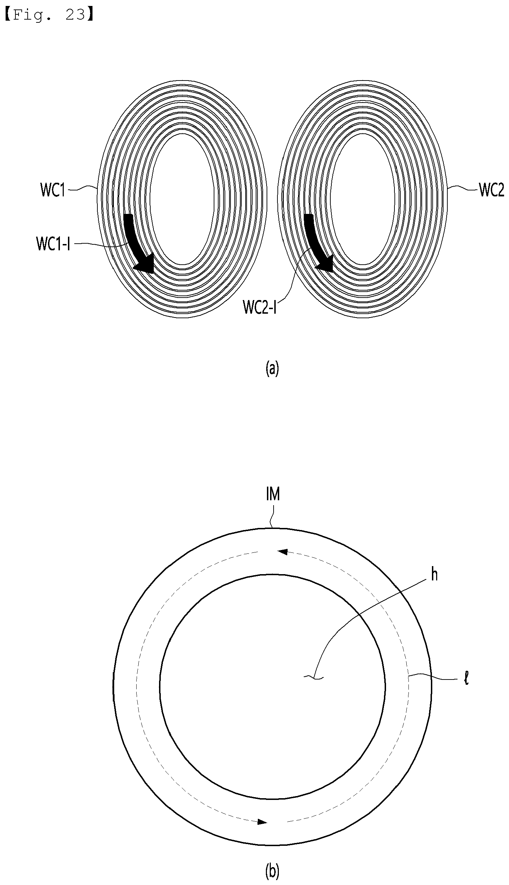

In this situation, an area of the loop generated in the intermediate heating element IM can be the sum of an area of the first loop l1 and an area of the second loop l2. This loop area is smaller than the area of the loop described later in FIG. 23, and as a result, the coupling force with the magnetic fields generated in the working coil WC can be lowered and be electrically separated.

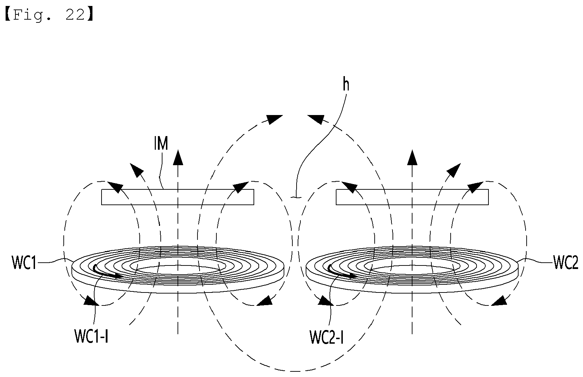

FIG. 22 is a view illustrating a state of the magnetic fields when the currents in the plurality of working coils flow in the same direction, and FIG. 23 is a view illustrating a state of the loop generated in the intermediate heating element when the currents in the plurality of working coils flow in the same direction.

The inverter 60 can control the first direction of the first current WC1-I flowing through the first working coil WC1 and the second direction of the second current WC2-I flowing through the second working coil WC2 so that the directions are the same. As illustrated in FIG. 22, both of the first direction and the second direction can be the counterclockwise direction. However, this is only an example, and both the first direction and the second direction can be the clockwise direction.

When the first current WC1-I flows in the counterclockwise direction in the first working coil WC1, the magnetic fields can pass upward through a central portion of the first working coil WC1, and a portion of the magnetic fields passing through the central portion can move to the outside of the first working coil WC1 and then rotate again along a path that passes through the central portion from the bottom to the top. For example, when the first current WC1-I flows in the counterclockwise direction in the first working coil WC1, the magnetic fields can rotate from the inside to the outside.

Similarly, when the second current WC2-I flows in the counterclockwise direction in the second working coil WC2, the magnetic fields can pass upward through a central portion of the second working coil WC2, and a portion of the magnetic fields passing through the central portion can move to the outside of the second working coil WC2 and then rotate again along a path that passes through the central portion from the bottom to the top. For example, when the second current WC2-I flows in the counterclockwise direction in the second working coil WC2, the magnetic fields can rotate from the inside to the outside.

Thus, the magnetic field can be offset in the center region of the working coil WC, and the magnetic fields can overlap with each other in the outer region.

FIG. 23 is a view illustrating a state in which the working coil WC and the intermediate heating element IM of FIG. 22 are distinguished from each other. For example, part (a) of FIG. 23 is a view illustrating the working coil WC of FIG. 22. As described above, the first current WC1-I and the second current WC2-I rotate in the same counterclockwise direction.

Part (b) of FIG. 23 is a view illustrating the intermediate heating element IM of FIG. 22 and illustrates a flow of induced current by magnetic fields generated in the first and second working coils WC1 and WC2. The induced current flows in the counterclockwise direction in the intermediate heating element IM due to the magnetic fields generated in the first working coil WC1, and also, the induced current flows in the counterclockwise direction in the intermediate heating element IM due to the magnetic fields generated in the second working coil WC2. For example, the induced current by the first working coil WC1 and the induced current by the second working coil WC2 can flow in the same direction, and thus, each induced current can form one large loop. For example, as illustrated in part (b) of FIG. 23, one loop l can be generated in the intermediate heating element IM by the first working coil WC1 and the second working coil WC2.

In this situation, the area of the loops generated in the intermediate heating element IM can be an area of the loop l integrated into one large loop.

Thus, the area of the loop illustrated in FIG. 21 can be less than the area of the loop illustrated in FIG. 22. For example, the area of the loop generated in the intermediate heating element IM when the current flows in different directions through the plurality of working coils WC1 and WC2 can be less than that of the loop generated in the intermediate heating element IM when the currents flow in the same direction through the plurality of working coils WC1 and WC2.

For example, the first size of the loop generated in the intermediate heating element IM when the first direction of the first current WC1-I flowing through the first working coil WC1 and the second direction of the second current WC2-I flowing through the second working coil WC2 are different from each other can be less than the second size of the loop generated in the intermediate heating element IM when the first direction and the second direction are the same.

In addition, as the area of the loop becomes smaller, the magnetic fields generated in the working coil WC can have less coupling force with the intermediate heating element IM, and thus, the magnetic fields coupled to the object HO to be heated can be increased, since the magnetic fields coupled to the intermediate heating element IM are decreased. In addition, as the magnetic field generated in the working coil WC has less coupling force with the intermediate heating element IM, heat generation of the intermediate heating element IM can be minimized.

As the area of the loop increases, the magnetic fields generated in the working coil WC can have a large coupling force with the intermediate heating element IM, and thus, the intermediate heating element IM can be coupled to many magnetic fields. Thus, since the intermediate heating element IM generates heat, the object HO to be heated can be heated through the intermediate heating element IM.

This intermediate heating element IM can be provided at a thickness regardless of a skin depth. For example, the intermediate heating element IM can have a thickness greater than the skin depth or can have a thickness less than the skin depth. Regardless of whether the thickness of the intermediate heating element IM is thinner or thicker than the skin depth or thicker than the skin depth, the intermediate heating element IM can be selectively heated according to the direction of the current flowing through the plurality of working coils. For example, the intermediate heating element IM can be made of a material such as aluminum or silver and have a thickness thinner than the skin depth, or can be made of a material such as stainless steel and have a thickness thicker than the skin depth. For example, according to an embodiment of the present disclosure, the design of the intermediate heating element IM provided in the cooktop 1 may not be limited in material, thickness, etc., and has an advantage of being implemented in various forms.

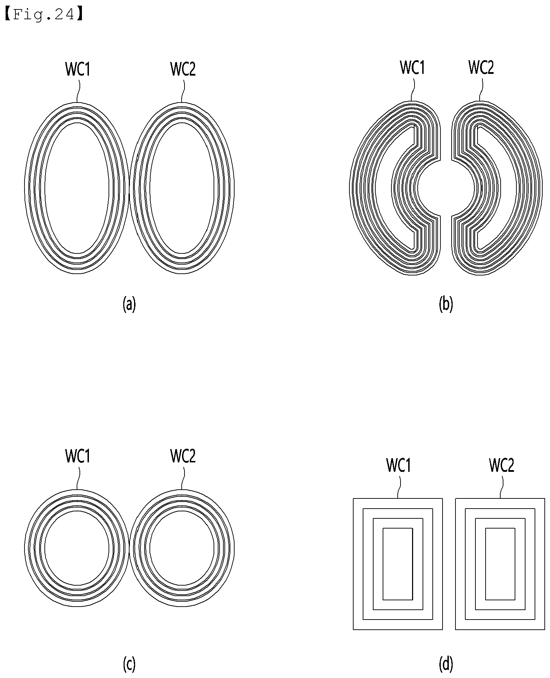

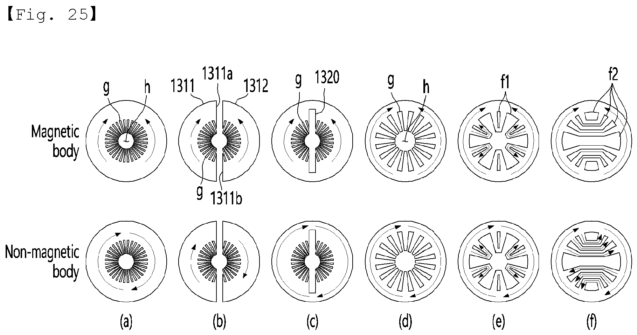

FIG. 24 is a view illustrating an example of various shapes of the working coil according to an embodiment of the present disclosure, and FIG. 25 is a view illustrating various examples of the intermediate heating element installed together with the working coil illustrated in FIG. 24 according to embodiments of the present disclosure.

Particularly, FIG. 24 illustrates various examples in which the working coil WC includes the first and second working coils WC1 WC2, and the first and second working coils WC1 WC2 are disposed side by side. In addition, FIG. 25 illustrates various examples of the intermediate heating element IM installed together when the working coil WC has a structure in which the plurality of working coils are disposed side by side as the example of FIG. 24.

For example, the first working coil WC1 and the second working coil WC2 can be arranged side by side, and the intermediate heating element IM can have a ring shape or a closed loop shape. However, at least one groove having a specific pattern can be defined in the ring-shaped intermediate heating element IM according to an embodiment.

According to a first embodiment, as illustrated in part (a) of FIG. 24, the working coil WC can be constituted by a first working coil WC1 and a second working coil WC2, each of which has an elliptical shape or an oval shape.

According to a second embodiment, the working coil WC can be constituted by a first working coil WC1 and a second working coil WC2, each of which has a half-moon shape or a crescent shape.

According to a third embodiment, as illustrated in part (b) of FIG. 24, the working coil WC can have a half-moon shape and be constituted by a first working coil WC1 and a second working coil WC2, in which at least a portion of a surface adjacent to the other working coil is concave.

According to a fourth embodiment, as illustrated in part (c) of FIG. 24, the working coil WC can be constituted by a first working coil WC1 and a second working coil WC2, each of which has a circular shape.

According to a fifth embodiment, as illustrated in part (d) of FIG. 24, the working coil WC can be constituted by a first working coil WC1 and a second working coil WC2, each of which has a square shape or a rectangular shape.

However, the above-described first to fifth embodiments are merely an example, and the shapes of the first working coil WC1 and the second working coil WC2 constituting the working coil WC can vary.

When the working coil WC is constituted by the first and second working coils WC1 and WC2 disposed side by side, the intermediate heating element IM can be the same types of configurations as the examples shown in FIG. 25.

According to the first embodiment, as illustrated in part (a) of FIG. 25, the intermediate heating element IM can have a circular shape with a hole h at a center thereof, and a plurality of grooves g can be defined at the inside area around the hole h.

According to the second embodiment, as illustrated in part (b) of FIG. 25, the intermediate heating element IM can be divided into two members 1311 and 1312, and each of the two members 1311 and 1312 can have a semicircular shape. In addition, each of the two members can have a concave central portion of surfaces 1311a and 1311b corresponding to the different members, and a plurality of grooves g can be defined around the central portion.

According to the third embodiment, as illustrated in part (c) of FIG. 25, the intermediate heating element IM can be provided with a through-portion 1320 that is elongated in one direction (e.g., a slit shape or a keyhole shape), the hole defined in the center can be larger than that around the through-portion, and the plurality of grooves g can be defined around the center of through-portion 1320.

According to the fourth embodiment, as illustrated in part (d) of FIG. 25, the intermediate heating element IM can have a circular shape with a hole h defined in the center thereof, and a plurality of grooves g can be defined from the hole h defined in the center thereof toward an outer circumference (e.g., an iris shape). Here, a length of each of the plurality of grooves g can be longer than a radius of the intermediate heating element IM. For example, a length of the groove g of the intermediate heating element IM illustrated in part (a) of FIG. 25 can be shorter than the radius, and a length of the groove g of the intermediate heating element IM illustrated in part (b) of FIG. 25 can be longer than the radius.

As illustrated in parts (a) to (d) of FIG. 25, when the intermediate heating element IM has the plurality of grooves h around the center, the heating area can be larger than when the intermediate heating element IM has a simple ring shape, and thus, heating efficiency for the non-magnetic body can be improved.

According to the fifth embodiment, as illustrated in parts (e) or (f) of FIG. 25, the grooves f1 and f2 can be defined in the intermediate heating element IM in a pattern having a plurality of paths, e.g., a path, through which the induced current flows along an outer circumference, and a path, through which the induced current flows along the inside. Particularly, as illustrated in part (e) of FIG. 25, the groove f1 can be provided in a pattern having a path in which the induced current flowing along the inside has a circular, elliptical, or square shape, or as illustrated in part (f) of FIG. 25, the groove f2 can be provided in a single pattern having a path elongated in one direction.

As illustrated in parts (e) and (f) of FIG. 25, when the induced current not only flows along the outer circumference but also flows through the inside, there is an advantage that heating performance for each type of object HO to be heated is improved. In addition, there is an advantage that even a small-sized object HO to be heated is heated through the loop generated by the current flowing along the inside.

Particularly, if the groove f1 has a pattern in which a plurality of loops are generated at the inside, as illustrated in part (e) of FIG. 25, there is an advantage in that, the area of the loop increases to maximize the heating area when the non-magnetic body is heated.

In addition, if the groove f2 has a pattern that allows the current to flow for a long time in one direction from the inside, as illustrated in part (f) of FIG. 25, when the magnetic body is heated, an electrical splitting effect can be maximized so that the area of the loop is almost 0 (e.g., canceled out), and heat generation of the intermediate heating element is minimized, and as a result, there is an advantage that magnetic heating efficiency is maximized. When the intermediate heating element IM having the grooves f2 that has the same pattern as part (f) in FIG. 25, there is an advantage that, when current in the same direction is induced, the area of the loop is maximized, and even when a small-sized object HO is placed on the cooktop, it can be effectively heated by the loop generated by the inner current.

As in the fifth embodiment, when the groove defined in the intermediate heating element IM is provided to have a pattern in which the induced current flows along each of the outer circumference and the inner side, there is an advantage that even a small object HO can be effectively heated by the induced current flowing along the inside.

Since the above-described embodiments are merely examples for convenience of explanation, it is reasonable that they are not limited thereto.

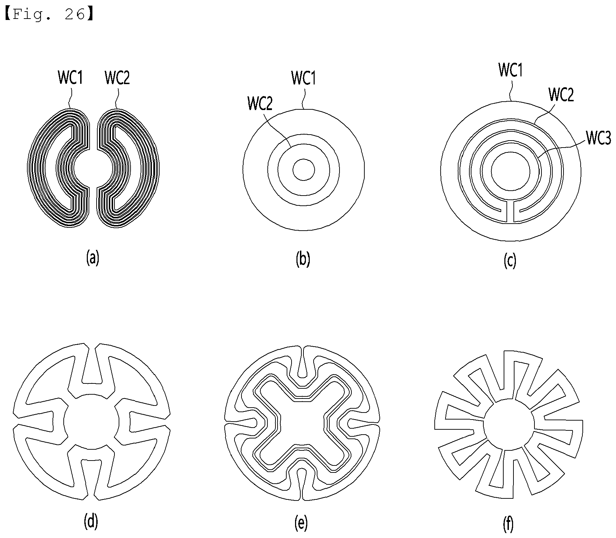

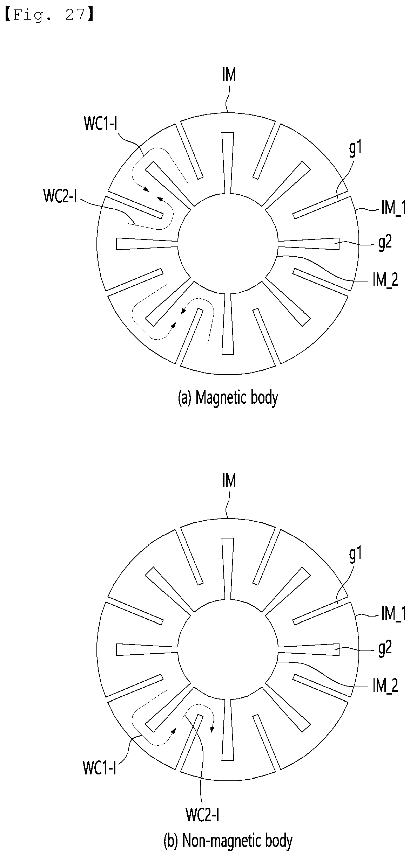

FIG. 26 is a view illustrating examples of various shapes of the working coil according to embodiments of the present disclosure, and FIG. 27 is a view illustrating an example of the intermediate heating element installed together with the working coil illustrated in FIG. 26.

Particularly, FIG. 26 illustrates examples in which the working coil WC is provided to have an inner coil and an outer coil. FIG. 27 illustrates an example of the intermediate heating element IM installed together when the working coil WC has a structure including the inner working coil and the outer working coil as illustrated in FIG. 26.

According to the first embodiment, as illustrated in part (a) of FIG. 26, the working coil WC can include a first working coil WC1 and a second working coil WC2. Each of the first working coil WC1 and the second working coils WC2 can have a semicircular shape or a crescent shape, and a central portion of a surface adjacent to the other working coil can be concave. Thus, the concave portion of the first and second working coils WC1 and WC2 can provide the inner coil, and the outer circumferential portion can provide the outer coil.

According to the second embodiment, as illustrated in part (b) of FIG. 26, the working coil WC includes a first working coil WC1 and a second working coil WC2. A central hole can be defined in a central portion of each of the first and second working coils WC1 and WC2, and the second working coil WC2 can be disposed at a central portion of the first working coil WC1. For example, the second working coil WC2 can be disposed inside the first working coil WC1. Thus, the first working coil WC1 can provide an outer coil, and the second working coil WC2 can provide an inner coil.

According to the third embodiment, as illustrated in part (c) of FIG. 26, the working coil WC can include first, second and third working coils WC1, WC2, and WC3. The second working coil WC2 can be disposed inside the first working coil WC1, and the third working coil WC3 can be disposed inside the second working coil WC2. In (c) of FIG. 26, the second working coil WC2 is provided in a horseshoe shape, but this is only an example. For example, the second working coil WC2 can have a ring shape or a closed loop shape. In addition, the third working coil WC3 can be illustrated in a ring shape, but can also have a horseshoe shape.

According to the fourth embodiment, as illustrated in parts (d), (e), and (f) of FIG. 26, the working coil WC can be provided as one working coil, or at least a portion of the working coil can be bent to have an inner coil and an outer coil.

When the working coil WC is constituted by the inner coil and the outer coil, the intermediate heating element IM can be provided so that the induced current flows along each of outer and inner sides to merge or collide with each other.

Referring to the example of FIG. 27, a hole can be defined in a center of the intermediate heating element IM. In addition, a plurality of grooves g1 defined inward from an outer circumference IM_1 and a plurality of grooves g2 defined outward from an inner circumference IM_2 can be defined.

For example, one of the first working coil WC1 and the second working coil WC2 can be disposed inside the other, and simultaneously, the intermediate heating element IM can have a ring shape, and the plurality of first grooves g1 extending from the outer circumference IM_1 and the plurality of second grooves g2 extending from the inner circumference IM_2 can be provided alternately. As the first grooves g1 and the second grooves g2 are provided alternately, the current induced in the intermediate heating element IM can flow in a zigzag manner.

Therefore, if the object HO to be heated is the magnetic body, as illustrated in part (a) of FIG. 27, the current WC1-I induced by one of the inner coil and the outer coil and the current WC2-I induced by the other one can flow in different directions and can effectively cancel each other out.

However, if the object HO to be heated is the non-magnetic body, as illustrated in part (b) of FIG. 27, the current WC1-I induced by one of the inner coil and the outer coil and the current WC2-I induced by the other one can flow in the same direction.

Referring to FIGS. 25 and 27, the number of loops generated in the intermediate heating element IM when the object HO to be heated is the magnetic body can be greater than that of loops generated in the intermediate heating element IM when the object HO to be heated is the non-magnetic body.

In summary, the area of the loop generated in the intermediate heating element IM by the working coil WC when the object HO to be heated is the non-magnetic body can be greater than that of the loop when the object HO to be heated is the magnetic body. Therefore, the number of magnetic fields coupled to the working coil WC when the object HO to be heated is the magnetic body can be greater than that of magnetic fields coupled to the working coil WC when the object HO to be heated is the non-magnetic body. In addition, since the area of the loop generated in the intermediate heating element IM is maximized when the object HO to be heated is the non-magnetic body, the coupling force between the magnetic fields generated in the working coil WC and the intermediate heating element IM can be maximized, and thus, the intermediate heating element IM can be overheated, and the heat generated by the intermediate heating element IM can heat the object HO to be heated.

In the present disclosure, the direction of the current induced in the intermediate heating element IM by the first working coil WC1 and the direction of the current induced in the intermediate heating element IM by the second working coil WC2 can be the same or different from each other according to the type of object HO to be heated. For example, if the object HO to be heated is the non-magnetic body, the direction of the current induced in the intermediate heating element IM by the working coil WC1 and the direction of the current induced in the intermediate heating element IM by the second working coil WC2 can be the same, and if the object HO to be heated is the magnetic body, the direction of the current induced in the intermediate heating element IM by the working coil WC1 and the direction of the current induced in the intermediate heating element IM by the second working coil WC2 can be different directions.

As described above, in order to control the direction of the current induced in the intermediate heating element IM to be different or the same, the directions of the current supplied to the first working coil WC1 and the second working coil WC2 have to be controlled to be the same or different from each other.

A control circuit for controlling the directions of the current flowing through the first working coil WC1 and the second working coil WC2 can be configured in various manners.

A circuit diagram for controlling the directions of the current flowing through the plurality of working coils of the cooktop according to various embodiments of the present disclosure will be described with reference to FIGS. 28 to 31.

FIG. 28 is a view illustrating a first example of a circuit diagram for controlling directions of current flowing through a plurality of working coils according to an embodiment of the present disclosure.

FIG. 28 illustrates an example in which a circuit for controlling a plurality of working coils is implemented as a half-bridge inverter and a coil switching circuit.

As illustrated in the circuit diagram of FIG. 28, a cooktop 1 can include a power supply V configured to provide AC power, a bridge diode BD configured to rectify the AC power of the power supply V into DC power, a DC link capacitor C1 configured to smooth the rectified direct current power, an inverter 60 configured to convert the rectified direct current power into resonance current through a switching operation to provide the resonance current to the working coil WC, a working coil WC configured to generate magnetic fields due to the resonance current, a switch SW configured to control the current direction of the working coil WC, and a resonance capacitor C2.

The power supply V, the bridge diode BD, and the DC link capacitor C1 can rectify AC power into DC power and smooth the rectified DC power to be provided the inverter 60.

The inverter 60 can serve to convert the rectified direct current power into the resonance current through the switching operation and can be constituted by at least two switching elements 60-1 and 60-2. The switching elements 60-1 and 60-2 can be high-frequency semiconductor elements. For example, the switching elements can include IGBT, BJT, MOSFET, etc.

One end of the first working coil WC1 can be connected between the first switching element 60-1 and the second switching element 60-2, and the other end of the first working coil WC1 can be connected to the first switch SW1. One end of the second working coil WC2 can be connected to the first switch SW1, and the other end can be connected to the second switch SW2.

The second switch SW2 can have one end connected to the second working coil WC2 and the other end connected to the resonance capacitor C2.

The first switch SW1 and the second switch SW2 can be in contact with a contact point 1 or a contact point 2 at the same time by a control signal of the controller 193.

For example, when the first switch SW1 and the second switch SW2 are connected to the contact point 1, the current passing through the first working coil WC1 in the clockwise direction can pass through the second working coil WC2 along the contact point 1 connected to the first working coil WC1 in the counterclockwise direction to move along the contact point 1 connected to the second switch SW2.

For example, when the first switch SW1 and the second switch SW2 is in contact with the contact point 1 at the same time, directions of the current flowing through the first working coil WC1 and the second working coil WC2 can be opposite to each other.

When the first switch SW1 and the second switch SW2 are connected to the contact point 2 at the same time, the current passing through the first working coil WC1 in the clockwise direction can pass through the second working coil WC2 along the contact point 2 connected to the first working coil WC1 in the clockwise direction to move along the contact point 2 of the second switch SW2.

For example, when the first switch SW1 and the second switch SW2 is in contact with the contact point 1 at the same time, the current flowing through the first working coil WC1 and the second working coil WC2 can be flowing in the same direction.

One end of the second switch SW2 can be in contact with the contact point 1 or the contact point 2 and then be connected to the second working coil WC2, and the other end of the second switch SW2 can be connected between a first resonance capacitor C2-1 and a second resonance capacitor C2-2.

Through this configuration of the control circuit, the induction heating type cooktop 1 according to an embodiment of the present disclosure can control the current direction of the working coil WC by using the half-bridge inverter 60 and the switch SW. According to this embodiment, there is no need to provide an additional circuit to synchronize the inverter signal, which has the advantage of simplifying a product structure and reducing costs.

FIG. 29 is a view illustrating a second example of the circuit diagram for controlling the directions of the current flowing through the plurality of working coils according to an embodiment of the present disclosure.

FIG. 29 illustrates an example in which a circuit for controlling a plurality of working coils is implemented as a full-bridge inverter and a coil switching circuit.

Similar to the circuit diagram of FIG. 28, a cooktop 1 can include a power supply V configured to provide AC power, a bridge diode BD configured to rectify the AC power of the power supply V into DC power, a DC link capacitor C1 configured to smooth the rectified direct current power, an inverter 60 configured to convert the rectified direct current power into resonance current through a switching operation to provide the resonance current to the working coil WC, a working coil WC configured to generate magnetic fields due to the resonance current, a switch SW configured to control the current direction of the working coil WC, and a resonance capacitor C2. For convenience of explanation, descriptions that are duplicated with those described in FIG. 28 will be omitted.

However, the inverter 60 can be implemented as a full-bridge.

Specifically, one end of the first working coil WC1 can be connected between the first switching element 60-1 and the second switching element 60-2, and the other end of the first working coil WC1 can be connected to the first switch SW1. One end of the second working coil WC2 can be connected to the first switch SW1, and the other end can be connected to the second switch SW2.

The second switch SW2 can have one end connected to the second working coil WC2 and the other end connected to the resonance capacitor C2. The resonance capacitor C2 can have one end connected to the second switch SW2 and the other end connected between a third switching element 60-3 and a fourth switching element 60-4.

The first switch SW1 and the second switch SW2 can be in contact with a contact point 1 or a contact point 2 at the same time by a control signal of the controller 193.

For example, when the first switch SW1 and the second switch SW2 are connected to the contact point 1, the current passing through the first working coil WC1 in the clockwise direction can pass through the second working coil WC2 along the contact point 1 connected to the first working coil WC1 in the counterclockwise direction to move along the contact point 1 connected to the second switch SW2.

For example, when the first switch SW1 and the second switch SW2 is in contact with the contact point 1 at the same time, directions of the current flowing through the first working coil WC1 and the second working coil WC2 can be opposite to each other.

When the first switch SW1 and the second switch SW2 are connected to the contact point 2 at the same time, the current passing through the first working coil WC1 in the clockwise direction can pass through the second working coil WC2 along the contact point 2 connected to the first working coil WC1 in the clockwise direction to move along the contact point 2 of the second switch SW2.

For example, when the first switch SW1 and the second switch SW2 are in contact with the contact point 1 at the same time, the current flowing through the first working coil WC1 and the second working coil WC2 can be flowing in the same direction.

One end of the second switch SW2 can be in contact with the contact point 1 or the contact point 2 and then be connected to the second working coil WC2, and the other end of the second switch SW2 can be connected between a first resonance capacitor C2-1 and a second resonance capacitor C2-2.

Through this configuration of the control circuit, the induction heating type cooktop 1 according to an embodiment of the present disclosure can control the current direction of the working coil WC by using the full-bridge inverter 60 and the switch SW. According to this embodiment, there is no need to provide an additional circuit to synchronize the inverter signal, which has the advantage of simplifying a product structure and reducing costs.

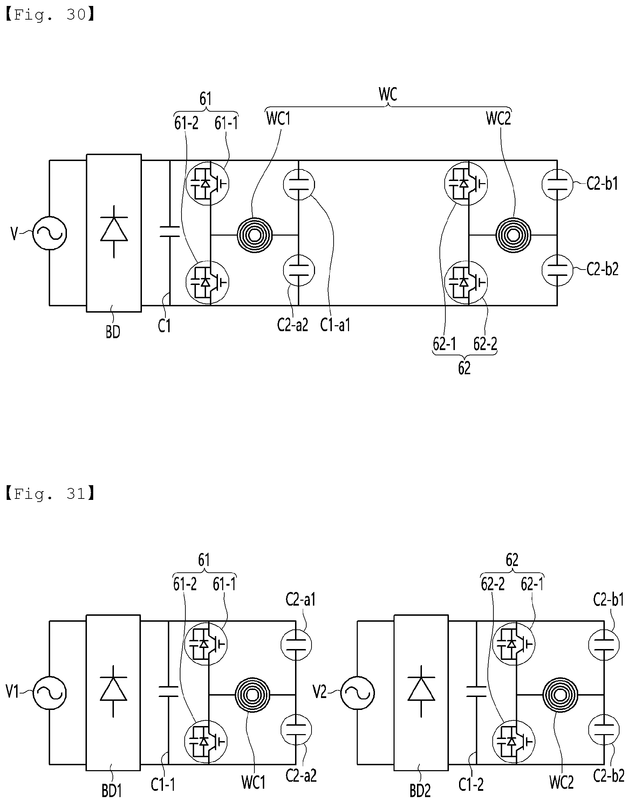

FIG. 30 is a view illustrating a third example of the circuit diagram for controlling the directions of the current flowing through the plurality of working coils according to an embodiment of the present disclosure.

FIG. 30 illustrates an example in which a circuit for controlling a plurality of working coils is implemented as two half-bridge inverter circuits.

According to the third example, an inverter 60 can include a first inverter 61 and a second inverter 62. For example, the inverter 60 can be implemented with two half-bridges.

One end of the first working coil WC1 can be connected between a first switching element 61-1 of the first inverter 61 and a second switching element 61-2 of the first inverter 61, and the other end of the first working coil WC1 can be connected between a first resonance capacitor C2-a1 and a second resonance capacitor C2-a2.

One end of the second working coil WC2 can be connected between a first switching element 62-1 of the second inverter 62 and a second switching element 62-2 of the second inverter 62, and the other end of the second working coil WC2 can be connected between a third resonance capacitor C2-b1 and a fourth resonance capacitor C2-b2.

For example, a controller 193 can control each of the first inverter 61 connected to the first working coil WC1 and the second inverter 62 connected to the second working coil WC2 so that directions of current flowing through the first working coil WC1 and the second working coil WC2 are the same or different from other. In addition, the controller 193 can control the first inverter 61 or the second inverter 62 so that the current flowing through the first working coil WC1 or the second working coil WC2 is 0 and also can more precisely control a magnetic field region of the working coil WC when compared to a situation in which a single inverter is used.

According to the third embodiment, the cooktop 1 can precisely control the direction of the current flowing through the first working coil WC1 and the direction of the current flowing through the second working coil WC2, and thus, there is an advantage of variously controlling a magnetic field concentration area.

FIG. 31 is a view illustrating a fourth example of the circuit diagram for controlling the directions of the current flowing through the plurality of working coils according to an embodiment of the present disclosure.

FIG. 31 illustrates an example in which a circuit for controlling a plurality of working coils is implemented as two inverter circuits driven by separate bridge diodes.

According to the fourth example, a cooktop 1 can be configured to be driven through a plurality of inverters having separate bridge diodes BD.

Referring to FIG. 31, a control circuit of a first working coil WC1 can include a first power supply V1, a first bridge diode BD1, a first DC link capacitor C1-1, a first inverter 61, and first and second resonance capacitors C2-a1 and C2-a2.

A control circuit of the second working coil WC1 can include a second power supply V1, a second bridge diode BD2, a second DC link capacitor C1-2, a second inverter 62, and third and fourth resonance capacitors C2-b1 and C2-b2.

For example, the control circuit of the first working coil WC1 and the control circuit of the second working coil WC2 can be provided separately.

According to the configuration of the control circuit of FIG. 31, AC power supplied from the first power supply V1 and the second power supply V2 can be rectified into DC power through the first bridge diode BD1 and the second bridge diode BD2 to provide separate resonance current to the first working coil WC1 and the second working coil WC2 by the switching operation of the first inverter 61 and the second inverter 62, respectively.

As described above, a controller 193 can control each of the first inverter 61 connected to the first working coil WC1 and the second inverter 62 connected to the second working coil WC2 so that directions of current flowing through the first working coil WC1 and the second working coil WC2 flow in the same direction or flow in different directions.

A control circuit according to the fourth example can increase in input voltage applied to the working coil WC through a configuration with the separate bridge diode (BD). Therefore, there is an advantage of increasing in output of the working coil WC.

In addition, as illustrated in FIGS. 30 and 31, when the cooktop 1 is individually provided with the inverter for each of the plurality of working coils, a phase between the coils can be controlled to any phase between 0 degrees and 180 degrees. There is an advantage in that the direction of the current flowing through each of the plurality of working coils is controlled by turning each coil on or off.

As in the first to fourth examples described above, the cooktop 1 can be implemented to include the control circuit capable of controlling the current directions of the plurality of working coils, for example the first working coil WC1 and the second working coil WC2, to be the same or different from each other. However, since the above-described first to fourth embodiments are merely examples for convenience of explanation, it is reasonable that the embodiments are not limited thereto.

According to the present disclosure, the cooktop 1 according to an embodiment of the present disclosure can adjust an amount of heat generated in the intermediate heating element IM according to the type of object HO to be heated through a phase control method of the plurality of coils and pattern and shape designs of intermediate heating element IM. Thus, although the cooktop 1 is driven by the induction heating method, it can have the advantage of being able to heat both the magnetic type of cooking container and the non-magnetic type of cooking container.

In addition, the cooktop 1 can have the advantage of maximizing the heating performance for each type of cooking container because the magnetic fields are concentrated to the intermediate heating element IM or the cooking container according to the type of cooking container.

Furthermore, when the cooktop 1 heats the magnetic type of cooking container, the magnetic fields coupled to the intermediate heating element IM can be minimized, and thus, the limitation in that the intermediate heating element IM and the upper plate 15 on which the intermediate heating element IM is installed becomes hot can be minimized.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure.

## Claims

1. An induction heating type cooktop comprising:
an upper plate on which an object to be heated is placed;
an intermediate heating element installed on the upper plate;
a plurality of working coils configured to generate magnetic fields passing through the object to be heated or the intermediate heating element;
a resonance capacitor configured to resonate with at least one of the plurality of working coils;
an inverter configured to apply current to at least one of the plurality of working coils; and
a switch configured to selectively connect at least one of the plurality of working coils to the inverter.

2. The induction heating type cooktop according to claim 1, wherein the plurality of working coils comprise:
a first working coil having one end connected to the inverter and the other end connected to the switch; and
a second working coil selectively connected to the first working coil according to a state of the switch.

3. The induction heating type cooktop according to claim 2, wherein the switch comprises a first switch and a second switch,
wherein the first switch is configured to determine whether the first working coil and the second working coil are connected to each other, and
the second switch is configured to determine whether the second working coil and the resonance capacitor are connected to each other.

4. The induction heating type cooktop according to claim 3, wherein the first switch is configured to connect the first working coil to a first point between the second working coil and the second switch or a second point between the second working coil and the first switch, and
the second switch is configured to connect the resonance capacitor to the first point or the second point.

5. The induction heating type cooktop according to claim 3, wherein, in a first operation mode, the first switch is configured to connect the first working coil to the second point, and the second switch is configured to connect the resonance capacitor to the first point, and
in a second operation mode, the first switch is configured to connect the first working coil to the first point, and the second switch is configured to connect the resonance capacitor to the second point.

6. The induction heating type cooktop according to claim 5, wherein, in a third operation mode, the first switch and the second switch are configured to connect the first working coil and the resonance capacitor to the first point or the second point at the same time.

7. The induction heating type cooktop according to claim 2, wherein the first working coil is disposed inside the second working coil, and
the number of turns of the second working coil is less than the number of turns of the first working coil.

8. The induction heating type cooktop according to claim 2, wherein the first working coil and the second working coil are disposed side by side at left and right sides, respectively, and
the number of turns of the first working coil and the number of turns of the second working coil are the same.

9. An induction heating type cooktop comprising:
an upper plate on which an object to be heated is placed;
an intermediate heating element installed on the upper plate;
a plurality of working coil comprising at least first and second working coils configured to generate magnetic fields for heating the object to be heated; and
an inverter configured to apply current to at least one of the plurality of working coils,
wherein the inverter changes a direction of current of at least one of the first and second working coils.

10. The induction heating type cooktop according to claim 9, wherein the direction of the current flowing through one of the first and second working coils is constant, and
the direction of the current flowing through the other is variable.

11. The induction heating type cooktop according to claim 10, wherein the direction of the current flowing through the first working coil is constant, and
the direction of the current flowing through the second working coil is variable.

12. The induction heating type cooktop according to claim 9, wherein, in a first operation mode, directions of the current applied to the first working coil and the second working coil are the same, and
in a second operation mode, directions of the current applied to the first working coil and the second working coil are different from each other.

13. The induction heating type cooktop according to claim 12, wherein, in a third operation mode, the current is applied only to the first working coil, and no current is applied to the second working coil.

14. The induction heating type cooktop according to claim 11, further comprising a switch configured to change the direction of the current flowing through the second working coil.

15. The induction heating type cooktop according to claim 11, wherein the inverter is driven at a constant operation frequency, and
an output is changed according to the current flowing through the second working coil.

16. The induction heating type cooktop according to claim 15, wherein, when the direction of the current flowing through the second working coil is different from the direction of the current flowing through the first working coil, the object to be heated is heated at a first output,
when the current does not flow through the second working coil, the object to be heated is heated at a second output less than the first output, and
when the direction of the current flowing through the second working coil is the same as the direction of the current flowing through the first working coil, the object to be heated is heated at a third output less than the second output.

17. The induction heating type cooktop according to claim 11, wherein a composite inductance of the plurality of working coils varies according to the current flowing through the second working coil.
